# EUROPEAN PATENT APPLICATION

(11) **EP 4 755 754 A2**
(43) Date of publication of application: **10.06.2026**
(21) Application number: 26173952.8
(22) Date of filing: 26.02.2024
(51) Int. Cl.: B62B 5/08

(54) **STANDING BOARD AND CHILD CARRIER**

(30) Priority: 24.02.2023 CN 202310174911
(62) Divisional of application: 24159700.4
(71) Applicant: Wonderland Switzerland AG, 6312 Steinhausen (CH)
(72) Inventor: ZHU, Wanquan, Dongguan, Guangdong, 523648 (CN); LIU, Jiming, Dongguan, Guangdong, 523648 (CN)
(74) Representative: Flentje, Hanno Alexander Peter

(57) **Abstract**

The present application relates to a standing board (100) and a child carrier. The standing board (100) is applicable to the child carrier, and includes: a bracket (1) having a front end configured to be connected to a frame of the child carrier; and a first support board (21) supported by the bracket (1). A length of the bracket (1) is adjustable such that a position of the first support board (21) in a front-rear direction is adjustable.

## Description

### TECHNICAL FIELD

The present application relates to the field of children products, and in particular, to a standing board and a child carrier.

### BACKGROUND

A standing board is connected to the rear end of a frame of a child carrier, which provides a carrying portion for children besides a seat of the child carrier, so that the child carrier can carry one or more children at one time.

### SUMMARY

In an aspect, the present application provides a standing board applicable to a child carrier. The standing board includes: a bracket having a front end configured to be connected to a frame of the child carrier; and a first support board supported by the bracket. A length of the bracket is adjustable such that a position of the first support board in a front-rear direction is adjustable.

In an embodiment, the first support board is disposed adjacent to a rear end of the bracket. The standing board further includes a second support board adapted to be retracted or expanded according to a change in the length of the bracket. When the second support board is expanded, the second support board is supported by the bracket and positioned in front of the first support board. The first support board and the second support board form a first support platform.

In an embodiment, the second support board is detachably connected to the first support board. Or, the second support board is movably connected to the first support board. When the second support board is retracted, the second support board and the first support board overlap to form a second support platform. An area of the second support platform is less than an area of the first support platform. Or, the second support board is telescopic.

In an embodiment, a rear end of second support board is pivotally connected to a front end of the first support board. When the second support board is retracted, the second support board is flipped backward onto the first support board. Or, the second support board is slidingly connected to the first support board. The second support board is adapted to be retracted or expanded by sliding forward and backward.

In an embodiment, when the second support board is retracted, the second support board is overlapped on the first support board. The standing board further includes a retaining mechanism configured to retain a relative position of the first support board and the second support board when the second support board is overlapped on the first support board.

In an embodiment, the retaining mechanism includes: magnetic members disposed on the first support board and the second support board respectively; or, a fastener disposed on the first support board and/ or the second support board.

In an embodiment, the bracket includes a fixed sleeve and at least one telescopic sleeve, and the fixing sleeve and the at least one telescopic sleeve are successively sleeved together. The fixed sleeve is configured to be connected to the frame. The first support board is connected to an end telescopic sleeve of the at least one telescopic sleeve.

In an embodiment, the fixed sleeve includes a first transverse section and at least one first longitudinal section positioned at a front end of the at least one first longitudinal section. The at least one telescopic sleeve includes at least one second longitudinal section. Each of the at least one second longitudinal section is sleeved with a corresponding one of the at least one first longitudinal section. The first support board remains in contact with the first transverse section.

In an embodiment, the bracket includes a locking mechanism configured to lock the length of the bracket.

In an embodiment, the bracket includes: a fixed sleeve configured to be connected to the frame; a telescopic sleeve sleeved with the fixed sleeve, the first support board being mounted on the telescopic sleeve; and a locking mechanism configured to lock a telescopic position of the telescopic sleeve.

In an embodiment, at least two first positioning holes are arranged on the fixed sleeve, and arranged at intervals in the front-rear direction. The telescopic sleeve is sleeved inside the fixed sleeve. The locking mechanism includes: a first locking member disposed in the telescopic sleeve and having a locked position, in which the first locking member is selectively inserted into one of the at least two first positioning holes, and an unlocked position, in which the first locking member is withdrawn from the one of the at least two first positioning holes into which the first locking member is inserted; and a first unlocking member configured to drive the first locking member to move from the locked position to the unlocked position.

In an embodiment, the locking mechanism further includes: a first driving member; a second driving member; and a pulling member. A first end of the pulling member is connected to the first driving member, and a second end of the pulling member is connected to the second driving member. The first driving member is operatively connected to the first unlocking member. The second driving member is operatively connected to the first locking member.

In an embodiment, the first unlocking member is mounted on the first support board and movable in the front-rear direction. A moving direction of the first unlocking member intersects with a moving direction of the first driving member. The second driving member is sleeved in the telescopic sleeve. The telescopic sleeve is provided with a second positioning hole in sliding fit with the first locking member. A moving direction of the second driving member intersects with a moving direction of the first locking member.

In an embodiment, the second driving member is sleeved in the telescopic sleeve. A fixed base is mounted in the telescopic sleeve, and is provided with a first slideway and a first elongated hole in communication with the first slideway. The first locking member is in sliding fit with the first slideway, and includes a first shaft in sliding fit with the first elongated hole. the second driving member drives the first locking member through the first shaft. The second driving member drives the first locking member through the first shaft.

In an embodiment, the locking mechanism further includes a first elastic reset member configured to drive the first locking member to move toward the locked position.

In an embodiment, the first support board includes a top board and a bottom board. The top board and the bottom board are butted against each other to form a channel receiving the telescopic sleeve. The locking mechanism includes: a first locking member disposed at a front end of the telescopic sleeve, and configured to lock a telescopic position of the telescopic sleeve; and a first unlocking member mounted at a rear end of the bottom board and movable in the front-rear direction. The first unlocking member drives the first locking member to be unlocked through the pulling member.

In an embodiment, the front end of the bracket is provided with a connecting base. The connecting base is adapted to be detachably connected to the frame.

In an embodiment, the connecting base includes a first half-hoop and a second half-hoop. A first end of the first half-hoop is pivotally connected to a first end of the second half-hoop. A second end of the first half-hoop is detachably connected to a second end of the second half-hoop.

In an embodiment, the front end of the bracket is provided with a connecting base. The connecting base includes: a main body including an engaging groove configured to be detachably connected to the frame; and a second locking member movably mounted on the main body and having a closed position in which the engaging groove is closed and an open position in which the engaging groove is opened.

In an embodiment, the main body is provided with a second slideway. The second locking member is in sliding fit with the second slideway, so as to move between the closed position and the open position. A second elastic reset member is further disposed between the main body and the second locking member, and is configured to drive the second locking member to move toward the closed position.

In an embodiment, the second locking member is provided with a mounting groove and a second elongated hole in communication with the mounting groove. The second elastic reset member includes a spring mounted in the mounting groove. A second shaft is mounted in the main body, and is in sliding fit with the second elongated hole and extends into the mounting groove. The second shaft abuts against the second elastic reset member.

In an embodiment, the front end of the bracket is provided with a connecting base. The connecting base is configured to be connected to the frame. The bracket and the connecting base are pivotally connected to each other through a pivot shaft. The pivot shaft is positioned outside a cross tube of the frame. A forward flipping angle of the bracket is restricted by the cross tube.

In an embodiment, the front end of the bracket is provided with a connecting base. The connecting base is configured to be connected to the frame. The bracket and the connecting base are pivotally connected to each other. A rotation control mechanism is disposed between the bracket and the connecting base and is configured to control a rotation angle of the bracket.

In an embodiment, the rotation control mechanism includes a locking gear disposed between the bracket and the connecting base, and movable in an axial direction. The locking gear has a locked position and an unlocked position. When the locking gear is in the locked position, the locking gear remains in engagement with the bracket and the connecting base, and allows the bracket to rotate unidirectionally. When the locking gear is in the unlocked position, the locking gear is disengaged from one of the bracket and the connecting base, and allows the bracket to rotate bidirectionally.

In an embodiment, the rotation control mechanism further includes: a third elastic reset member configured to drive the locking gear to move from the unlocked position to the locked position; and a second unlocking member configured to drive the locking gear to move from the locked position to the unlocked position.

In an embodiment, the connecting base is provided with a first tooth portion, the bracket is provided with the second tooth portion, the locking gear is provided with a third tooth portion. When the locking gear is in the locked position, the third tooth portion is engaged with the first tooth portion and the second tooth portion, one of the first tooth portion and the second tooth portion is in contact with the third tooth portion though an oblique engaging surface. The oblique engaging surface allows the bracket to rotate unidirectionally. When the locking gear is in the unlocked position, the third tooth portion is disengaged from the first tooth portion or the second tooth portion.

In an embodiment, the rotation control mechanism includes a locking gear disposed between the bracket and the connecting base, and movable in an axial direction. The connecting base is provided with a first tooth portion, the bracket is provided with the second tooth portion, the locking gear is provided with a third tooth portion. The third tooth portion is engaged with the first tooth portion and the second tooth portion. One of the first tooth portion and the second tooth portion is in contact with the third tooth portion though a first oblique engaging surface and a second oblique engaging surface. The first oblique engaging surface and the second oblique engaging surface allow that the locking gear moves in the axial direction when being subjected to a circumferential force, to allow the bracket to rotate bidirectionally.

In an embodiment, the rotation control mechanism further includes a fourth elastic reset member configured to drive the locking gear to reset.

In another aspect, the present application provides a standing board applicable to a child carrier. The standing board includes: a connecting base configured to be connected to a frame of the child carrier; a bracket having a front end pivotally connected to the connecting base; a first support board supported by the bracket; and a rotation control mechanism disposed between the bracket and the connecting base and configured to control a rotation angle of the bracket.

In an embodiment, the rotation control mechanism includes a locking gear disposed between the bracket and the connecting base, and movable in an axial direction. The locking gear has a locked position and an unlocked position. When the locking gear is in the locked position, the locking gear remains in engagement with the bracket and the connecting base, and allows the bracket to rotate unidirectionally. When the locking gear is in the unlocked position, the locking gear is disengaged from one of the bracket and the connecting base, and allows the bracket to rotate bidirectionally.

In an embodiment, the rotation control mechanism further includes a third elastic reset member configured to drive the locking gear to move from the unlocked position to the locked position.

In an embodiment, the rotation control mechanism further includes a second unlocking member configured to drive the locking gear to move from the locked position to the unlocked position.

In an embodiment, the connecting base is provided with a first tooth portion, the bracket is provided with the second tooth portion, the locking gear is provided with a third tooth portion. When the locking gear is in the locked position, the third tooth portion is engaged with the first tooth portion and the second tooth portion, one of the first tooth portion and the second tooth portion is in contact with the third tooth portion though an oblique engaging surface, and the oblique engaging surface allows the bracket to rotate unidirectionally. When the locking gear is in the unlocked position, the third tooth portion is disengaged from the first tooth portion or the second tooth portion.

In an embodiment, the rotation control mechanism includes a locking gear disposed between the bracket and the connecting base, and movable in an axial direction. The connecting base is provided with a first tooth portion, the bracket is provided with the second tooth portion, the locking gear is provided with a third tooth portion. The third tooth portion is engaged with the first tooth portion and the second tooth portion. One of the first tooth portion and the second tooth portion is in contact with the third tooth portion though a first oblique engaging surface and a second oblique engaging surface. The first oblique engaging surface and the second oblique engaging surface allow that the locking gear moves in the axial direction when being subjected to a circumferential force, to allow the bracket to rotate bidirectionally.

In an embodiment, the rotation control mechanism further includes a fourth elastic reset member configured to drive the locking gear to reset.

In yet another aspect, the present application provides a child carrier. The child carrier includes the standing board as described above.

In an embodiment, the child carrier further includes a foldable frame including two rear support legs. When the frame is folded, the standing board is tilted relative to the two rear support legs and is stored between the two rear support legs.

In an embodiment, the child carrier further includes a foldable frame. The frame includes a push handle frame, a front support leg, and a rear support leg that are connected to one another. When the frame is folded, an extending direction of the first support board intersects with an extending direction of at least one of the front support leg, the rear support leg, or the push handle frame.

In an embodiment, the child carrier further includes a foldable frame including two rear support legs. When the frame is folded, the first support board extends through a plane defined by the two rear support legs.

In an embodiment, the child carrier further includes a foldable frame including two front support legs. When the frame is folded, the first support board extends through a plane defined by the two front support legs.

In an embodiment, the child carrier further includes a foldable frame. The frame incudes two front support legs. When the frame is folded, the first support board extends from a space between the two rear support legs to a space between the two front support legs.

In yet another aspect, the present application provides a child carrier. The child carrier includes: a foldable frame including a push handle frame, a front support leg, and a rear support leg that are connected to one another; and a standing board detachably connected to the rear support leg, and including a bracket and a first support board supported by the bracket. The first support board is pivotable relative to the rear support leg through the bracket. When the frame is folded, an extending direction of the first support board intersects with an extending direction of at least one of the front support leg, the rear support leg, or the push handle frame.

In an embodiment, the frame includes two rear support legs. When the frame is folded, the first support board is tilted relative to the two rear support legs and is stored between the two rear support legs.

In an embodiment, the frame includes two front support legs and two rear support legs. When the frame is folded, the first support board extends from a space between the two rear support legs to a space between the two front support legs.

### BRIEF DESCRIPTION OF THE DRAWINGS

The drawings forming a part of the present application are used to provide a further understanding of the present application. The illustrative embodiments of the present application and the descriptions thereof are used to explain the present application and do not constitute an improper limitation of the present application.
FIG. 1 is a perspective view of a child carrier according to a first embodiment of the present application, in which the child carrier includes a standing board according to an embodiment of the present application, and the child carrier and the standing board are in a normal use state.
FIG. 2 is a top perspective view of the standing board shown in FIG. 1, from a certain perspective.
FIG. 3 is a bottom perspective view of the standing board shown in FIG. 1, from a certain perspective.
FIG. 4 is a top perspective view of the standing board shown in FIG. 1 from another perspective, in which a second support board is expanded and a bracket has a long length.
FIG. 5 is a top perspective view of the standing board shown in FIG. 1 from another perspective, in which the second support board is retracted and the bracket has a long length.
FIG. 6 is a top perspective view of the standing board shown in FIG. 1 from another perspective, in which the second support board is retracted and the bracket has a short length.
FIG. 7 is a side view showing a first support board and a second support board according to a modified example.
FIG. 8 is a top perspective view of the standing board shown in FIG. 1 from yet another perspective, in which the second support board is retracted relative to the first support board, the bracket has a short length, and the bracket is flipped forward relative to a connecting base.
FIG. 9 is a perspective view of the child carrier shown in FIG. 1, in which the standing board is flipped forward and is in a folded state.
FIG. 10 is a side view showing the child carrier shown in FIG. 1 after being folded.
FIG. 11 is an exploded top view of the standing board shown in FIG. 1 from a certain perspective.
FIG. 12 is a bottom exploded view of the standing board shown in FIG. 1 from a certain perspective.
FIGS. 13 is a bottom view of the standing board shown in FIG. 1, with a bottom board, support wheels, and a first unlocking member omitted for ease of illustration.
FIG. 14 is a bottom view of the standing board shown in FIG. 1, with the bottom board and support wheels are omitted for ease of illustration.
FIG. 15 is a cross-sectional view taken along a line A-A in FIG. 5.
FIG. 16 is a cross-sectional view taken along a line C-C in FIG. 6.
FIG. 17 is a perspective view of a child carrier according to a second embodiment of the present application, in which the child carrier includes a standing board according to an embodiment of the present application, and the child carrier and the standing board are in a normal use state, and a bracket of the standing board has a long length.
FIG. 18 is a top perspective view of the standing board shown in FIG. 17 from a certain perspective.
FIG. 19 is a bottom view of the standing board in FIG. 17.
FIG. 20 is another perspective view of the child carrier shown in FIG. 17, in which the bracket of the standing board has a short length.
FIG. 21 is another perspective view of the child carrier shown in FIG. 17, in which the standing board is flipped forward and is in a folded state.
FIG. 22 is a perspective view of the child carrier shown in FIG. 17 after being folded.
FIG. 23 is a perspective view of a child carrier according to a third embodiment of the present application, in which the child carrier includes a standing board according to an embodiment of the present application, and the child carrier and the standing board are in a normal use state.
FIG. 24 is a top perspective view of the standing board shown in FIG. 23.
FIG. 25 is cross-sectional view taken along a line D-D in FIG. 24, with a second locking member in a closed position.
FIG. 26 is cross-sectional view taken along a line D-D in FIG. 24, with the second locking member is in an open position.
FIG. 27 is a perspective view of the child carrier shown in FIG. 23, in which the standing board is flipped forward and is in an abnormal use state.
FIG. 28 is an exploded top view of the standing board shown in FIG. 23.
FIG. 29 is an exploded bottom view of the standing board shown in FIG. 23.
FIG. 30 is cross-sectional view taken along a line E-E in FIG. 24, with a second unlocking member is in a locked position.
FIG. 31 is cross-sectional view taken along a line E-E in FIG. 24, with the second unlocking member is in an unlocked position.
FIG. 32 is a perspective view of a standing board according to an embodiment of the present application from a certain perspective.
FIG. 33 is a perspective view of the standing board shown in FIG. 32 from another perspective.
FIG. 34 is a perspective view of the standing board shown in FIG. 32 from another perspective.
FIG. 35 is a partial exploded view of the standing board shown in FIG. 32 from a certain perspective.
FIG. 36 is a partial exploded view of the standing board shown in FIG. 32 from another perspective.

### DETAILED DESCRIPTION

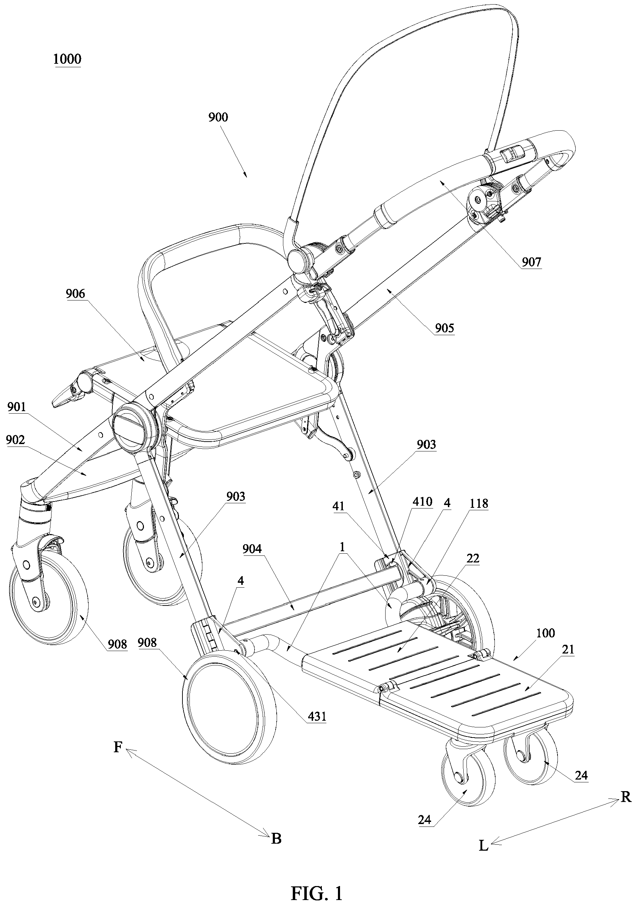

FIG. 1 is a perspective view of a child carrier 1000 according to a first embodiment of the present application. The child carrier 1000 includes a frame 900 and a standing board 100 according to an embodiment of the present application. In the embodiments of the present application, the child carrier 1000 is specifically described using a stroller as an example, and the frame 900 is described accordingly using a frame of the stroller as an example. In some alternative embodiments, the type of the child carrier 1000 is not limited to the stroller shown in the figures. For example, the child carrier 1000 can also be a child tricycle or other products with a movable frame.

Referring to FIG. 1, the frame 900 is a foldable frame, and has a basically symmetrical structure in a left-right direction. In some embodiments, the frame 900 includes, for example, two front support legs 901, a footrest 902 connected between the two front support legs 901, two rear support legs 903, and a cross tube 904 connected between the two rear support legs 903, a push handle frame, a seat 906, wheels 908 and the like. The push handle frame may include a lower push handle 905 and an upper push handle 907 that are pivotally connected to each other, but which is not limited thereto. The connection relationship between the various components of the frame 900 can be found in the relevant technology, and which will not be repeatedly described herein.

It should be noted that, unless otherwise clearly stated and limited, in the various embodiments of the present application, the orientational terms such as "front", "rear", "left", and "right" are based on the "front", "rear", "left", and "right" orientations of the child carrier during normal use respectively, and in figures, the "front", "rear" directions are schematically indicated by arrows F and B respectively, and the "left", and "right" directions are schematically indicated by arrows L and R respectively. These orientational terms are only used to make the description of the embodiments of the present application clearer and are not used to unduly limit the protection scope of the present application.

Referring to FIG. 1, the standing board 100 includes a bracket 1, a first support board 21, a second support board 22, support wheels 24, etc. The front end of the bracket 1 is configured to be connected to the frame 900 of the child carrier 1000. In some embodiments, the front end of the bracket 1 is provided with a connecting base 4, and the bracket 1 is connected to the frame 900 through the connecting base 4. The connecting base 4 is, for example, detachably or non-detachably connected to the rear support leg 903 and/or the cross tube 904 of the frame 900.

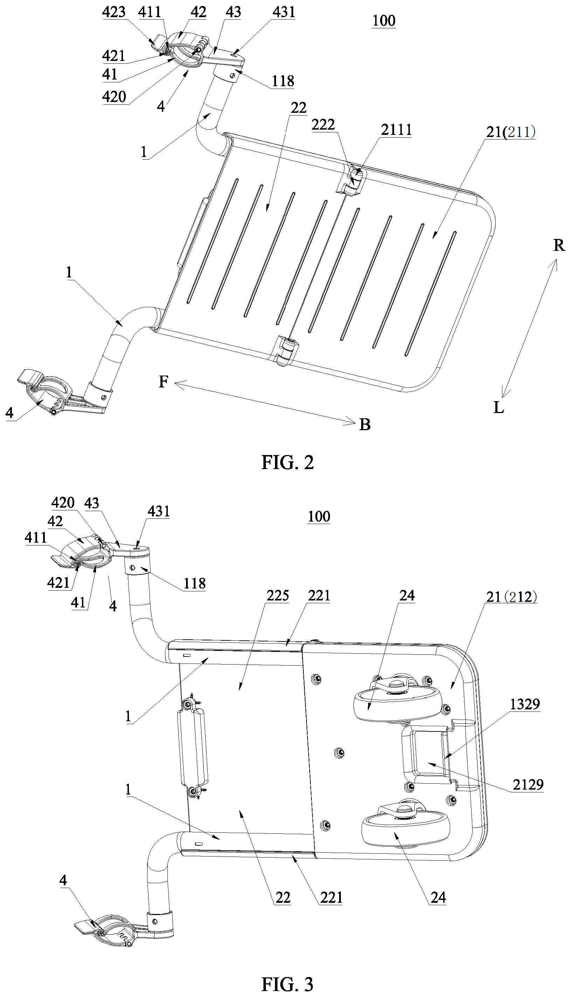

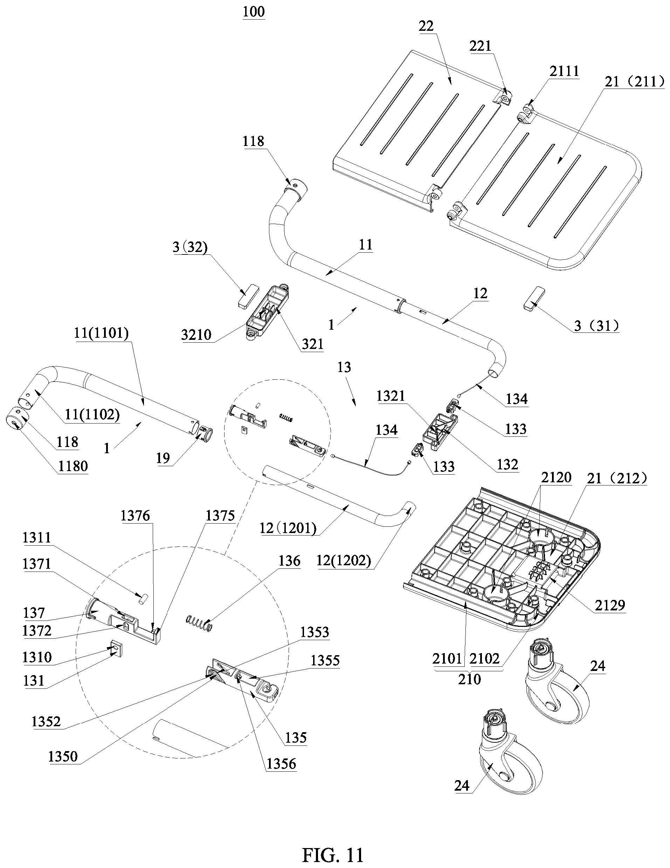

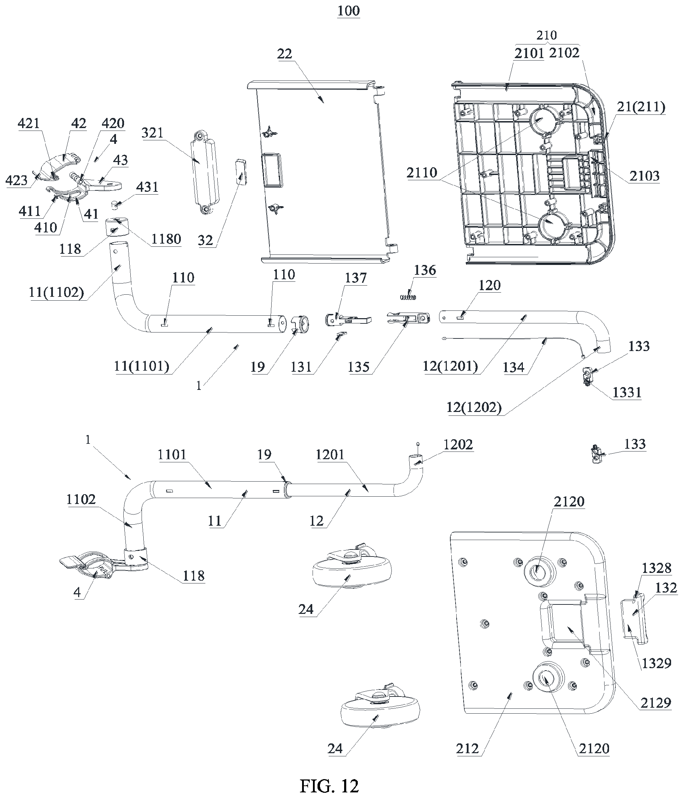

Continuing to refer to FIG. 1, the first support board 21 is disposed adjacent to the rear end of the bracket 1, and the first support board 21 is connected to the frame 900 through the bracket 1. Referring to the top and bottom perspective views of the standing board 100 shown in FIGS. 2 and 3 from certain perspectives, the first support board 21 may include a top board 211 and a bottom board 212. The top board 211 is used for a child to stand on. The support wheels 24 are connected, for example, to mounting positions 2110 of the top board 211 and the mounting position 2120 of the bottom board 212 (see FIGS. 11 and 12). The top board 211 and the bottom board 212 can be locked to each other through fasteners, or can be engaged to each other through an engaging structure. Certainly, the implementation of the first support board 21 is not limited to the above embodiments. For example, in some alternative embodiments, the first support board 21 may only include the top board 211, and the bottom board 212 is omitted. In this case, the support wheels 24 can be connected to the top board 211 or to the bracket 1.

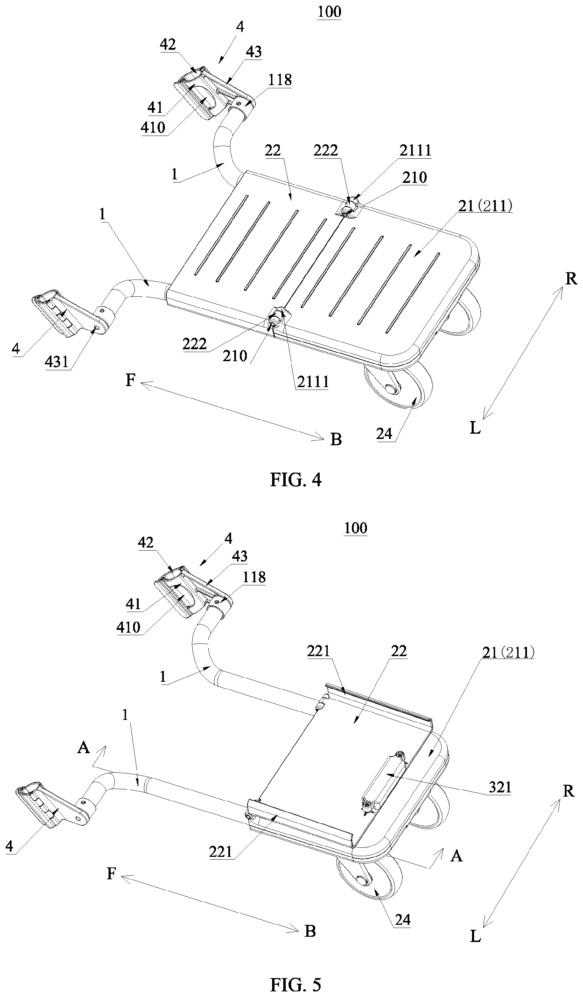

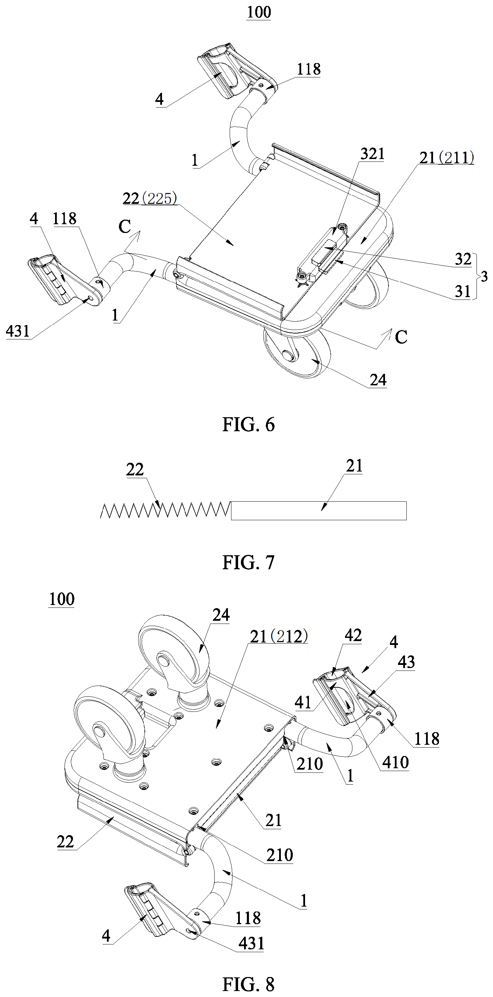

Referring to FIGS. 4 to 6, the length of the bracket 1 in a front-rear direction can be adjusted such that the position of the first support board 21 in the front-rear direction can be adjusted. The second support board 22 is movably connected to the first support board 21. The second support board 22 is adapted to be retracted or expanded according to the length change of the bracket 1. Referring to FIG. 4, when the bracket 1 has a relatively long length, the second support board 22 can be expanded. The expanded second support board 22 is supported by the bracket 1 and is positioned in front of the first support board 21. In this case, the second support board 22 and the first support board 21 form a first support platform with a large area. Referring to FIG. 5, when the length of the bracket 1 needs to be shortened, the second support board 22 is flipped over and retracted. The retracted second support board 22 overlaps the first support board 21 so that a second support platform with a small area is formed. The retracted second support board 22 does not interfere with the retracting movement of the bracket 1. Referring to FIG. 6, when the bracket 1 is retracted to a short length, the first support board 21 and the second support board 22 that overlap each other move forward along with the bracket 1.

It can be understood that when a child stands on the standing board 100, the child is in a protective space surrounded by the frame 900 and the parent pushing the stroller, and the child can grasp the appropriate parts of the frame 900 by hands to ensure standing balance. As a child grows and develops, the child's body size changes accordingly. A standing board in the prior art provides a bracket and a support board that are fixed in the front-rear direction, so that a child with a small body size can stand adjacent to the front side of the support board to be able to hold the frame, and a child with a large body size can stand adjacent to the rear side of the support board to hold the frame while keeping an appropriate distance in the front-rear direction to ensure to be in a comfortable standing posture. When the child with a small body size stands on the front side of the support board, the rear side of the support board is idle, which not only prevents parents from approaching the child in the front-rear direction, but also affects the range of activities of the parent' feet.

In the standing board 100 according to the embodiment of the present application, the length of the bracket 1 in the front-rear direction can be adjusted, so that the position of the first support board 21 in the front-rear direction can be adjusted. When the standing board 100 is used for the child with a large body size to stand on, the bracket 1 can be extended backward to increase its length, and the position of the first support board 21 shifts backward as the bracket 1 is extended, so that the second support board 22 is expanded in front of the first support board 21. The expanded second support board 22 and the first support board 21 can provide the first support platform with a large area. In other embodiments, the second support board 22 can also be retracted according to the situation, and the retracted second support board 22 is overlapped on the first support board 21 and provides the second support platform with a small area. After the second support board 22 is retracted, the bracket 1 is retracted forward to shorten the length of the bracket 1, and the positions of the first support board 21 and the second support board 22 shifts forward as the bracket 1 is shortened. In this case, the standing board 100 greatly reduces its own volume and reduces the impact on the range of motion of the feet of the parent.

It should be noted that in practical applications, the standing board 100 according to the embodiments of the present application can be used for children to stand on when the second support board 22 and the first support board 21 form the first support platform or the second support platform, or can be used as a storage board. In short, the standing board 100 according to the embodiment of the present application can meet various usage requirements.

In some alternative embodiments, the second support board 22 may be omitted, and the child may be carried only through the first support board 21. When the bracket 1 is extended backward to increase the length, the first support board 21 moves backward to suit the child with a large body size to stand on. When the bracket 1 is retracted forward to shorten the length, the first support board 21 moves forward to suit the child with a small body size to stand on, while making the standing board 100 small in size. In some alternative embodiments, a seat (not shown in figures) may be disposed on the first support board 21 for the child to sit on.

Referring to FIGS. 3 and 5, in some embodiments, flanges 221 can further be disposed on the left and right sides of the second support board 22. The flanges 221 are engaged with the bracket 1 when the second support board 22 is expanded, which can prevent the second support board 22 from shaking in the left-right direction.

Referring to FIGS. 4 to 6, an exemplary connection structure between the first support board 21 and the second support board 22 is shown. A rear end of the second support board 22 is provided with a first pivot base 222, and a front end of the top board 211 of the first support board 21 is provided with a second pivot base 2111. The first pivot base 222 and the second pivot base 2111 are pivotally connected through a first pivot shaft 210, so that the rear end of the second support board 22 is pivotally connected to the front end of the first support board 21. When it is necessary to retract the second support board 22, the second support board 22 is flipped backward (or toward the first support board 21) around the first pivot shaft 210 until the second support board 22 is overlapped on the first support board 21.

Referring to FIG. 6, in some embodiments, the standing board 100 may further include a retaining mechanism 3. The retaining mechanism 3 is configured to retain the relative position of the first support board 21 and the second support board 22 when the second support board 22 is overlapped on the first support board 21, so as to prevent undesired movements of the second support board 22 and the first support board 21. For example, the retaining mechanism 3 may include a first magnetic member 31 disposed on the first support board 21, and a second magnetic member 32 disposed on the second support board 22. When the second support board 22 is overlapped on the first support board 21, the first magnetic member 31 and the second magnetic member 32 approach each other and are attracted to each other, thereby fixing a position of the second support board 22 relative to the first support board 21. One of the first magnetic member 31 and the second magnetic member 32 may be a magnet, and the other of the first magnetic member 31 and the second magnetic member 32 may be a magnet or made of a material that can be attracted by a magnet. The first magnetic member 31 and the second magnetic member 32 can be mounted on the first support board 21 and the second support board 22 in any suitable manner. For example, in some embodiments, the first magnetic member 31 can be embedded in the first support board 21 through overmolding, and the second magnetic member 32 can be embedded in the second support board 22 through overmolding. In some alternative embodiments, the first magnetic member 31 may be mounted between the top board 211 and the bottom board 212 of the first support board 21. In some alternative embodiments, a housing 321 may be mounted on a bottom surface 225 of the second support board 22. The housing 321 is provided with a chamber 3210 (see FIG. 11). The second magnetic member 32 is received in the chamber 3210 of the housing 321.

The implementation of the retaining mechanism 3 is not limited to the above embodiments. For example, in some alternative embodiments, the retaining mechanism 3 may be a fastener disposed on the first support board 21 and/ or the second support board 22. When the second support board 22 is overlapped on the first support board 21, the first support board 21 and the second support board 22 can be in snap-fit through the fastener.

It should be noted that the connection structure between the first support board 21 and the second support board 22 is not limited to the above embodiments. For example, in some alternative embodiments, the second support board 22 is slidingly connected to the first support board 21. More specifically, the second support board 22 can, for example, slide forward and backward along the top board 211 of the first support board 21, so as to be expanded or retracted. When the second support board 22 slides forward, an overlapping area of the second support board 22 and the first support board 21 becomes small, and the second support board 22 is expanded. When the second support board 22 slides backward, the overlapping area of the second support board 22 and the first support board 21 becomes large, and the second support board 22 is retracted. In other alternative embodiments, the second support board 22 is, for example, detachably connected to the first support board 21, that is, the second support board 22 can be connected to the first support board 21 and supported by the bracket 1 as needed, or can be disconnected from the first support board 21 and not supported by the bracket 1.

Referring to FIG. 7, a schematic side view of another connection structure between the first support board 21 and the second support board 22 is schematically shown. The rear end of the second support board 22 is connected to the front end of the first support board 21. The second support board 22 includes, for example, a telescopic wrinkled structure. When the bracket 1 is extended backward to increase its length, the second support board 22 can be pulled forward to be expanded. When the bracket 1 needs to be retracted forward to shorten its length, the second support board 22 can be compressed backward to be retracted. In some alternative embodiments, the second support board 22 may also adopt other structures to make itself telescopic.

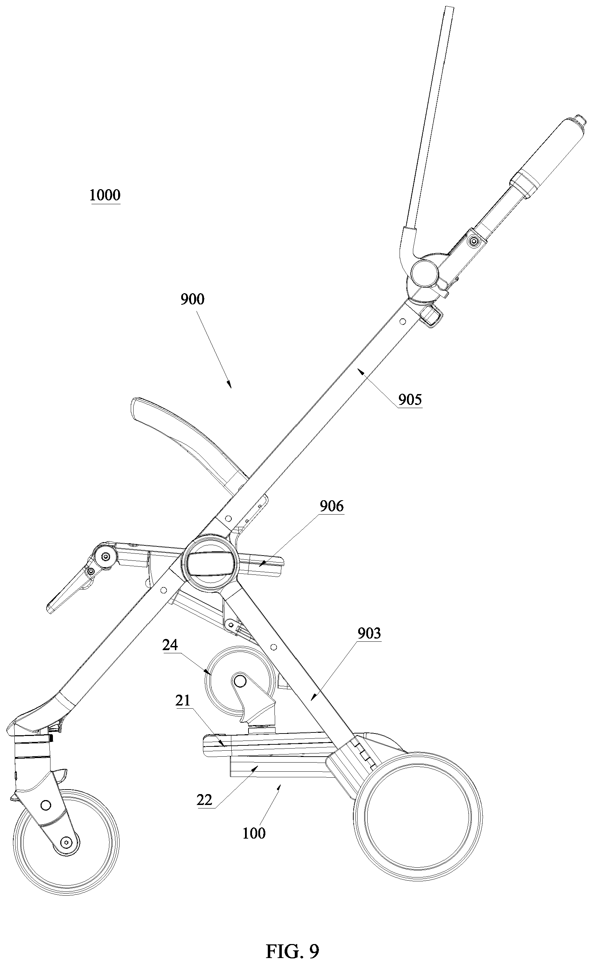

Referring to FIGS. 6 and 8, in some embodiments, the bracket 1 and the connecting base 4 are pivotally connected to each other through a second pivot shaft 431, which allows the bracket 1 to flip forward relative to the connecting base 4. As shown in FIG. 9, when the child carrier 1000 is in a normal use state and the standing board 100 is not needed, the bracket 1 can be flipped forward so that the standing board 100 is retracted and positioned in the space below the seat 906. The standing board 100 minimizes the impact on the range of motion of the feet of the parent. In some embodiments, the second pivot shaft 431 is positioned outside the cross tube 904 of the frame 900, that is, outside the space below the seat 906 (see FIG. 1). As shown in FIG. 9, when the bracket 1 is flipped forward into the space below the seat 906, the cross tube 904 abuts against the components of the standing board 100 (such as the second support board 22) to limit a forward flipping angle of the bracket 1, which can prevent the standing board 100 flipped forward from contacting the ground.

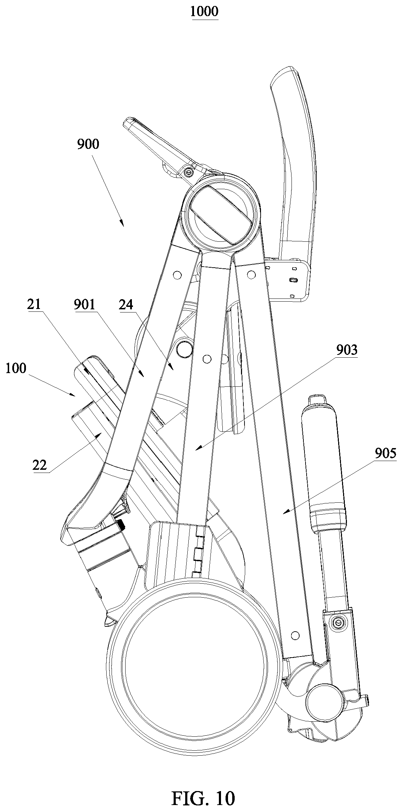

Referring to FIG. 10, in some embodiments, the frame 900 of the child carrier 1000 can be folded. By pivotally connecting the bracket 1 to the connecting base 4, when the frame 900 is folded, the second support board 22 of the standing board 100 can be retracted first, and then the bracket 1 can be shortened and then flipped over, without removing the standing board 100 from the frame 900.

It should be noted that after the frame 900 is folded, the standing board 100 is tilted relative to the rear support legs 903 and is stored between the two rear support legs 903 (or two front support legs 901). Specifically, as shown in FIG. 10, an extending direction of the first support board 21 (or the second support board 22) may intersect with an extending direction of at least one of the front support leg 901, the rear support leg 903, or the push handle frame. In this embodiment, the extending direction of the first support board 21 (or the second support board 22) intersects with two of the front support leg 901, the rear support leg 903, and the push handle frame.

As shown in FIG. 10, the first support board 21 (or the second support board 22) extends through at least a plane defined by the two rear support legs 903. In this embodiment, the first support board 21 (or the second support board 22) extends through a plane defined by the two front support legs 901 and the plane defined by the two rear support legs 903. That is, the first support board 21 (or the second support board 22) extends from a space between the two rear support legs 903 to a space between the two front support legs 901. In this way, even if the standing board 100 is not removed, the volume of the folded frame 900 will not be significantly increased. In addition, the rotations of the first support board 21 and the second support board 22 may be restricted by the front support legs 901, the cross tube 904, and the seat 906, and not rotate arbitrarily, which is beneficial to the convenience of transporting the frame 900.

Referring to the exploded views of the standing board 100 shown in FIGS. 11 and 12, the connecting base 4 may include a main body 43, a first half-hoop 41, and a second half-hoop 42. The bracket 1 is pivotally connected to the main body 43 through the second pivot shaft 431. A first end of the first half-hoop 41 is pivotally connected to a first end of the second half-hoop 42 through a third pivot shaft 420 (FIG. 12). A second end of the first half-hoop 41 is detachably connected to a second end of the second half-hoop 42. The first half-hoop 41 and the second half-hoop 42 that are connected to each other can be hooped at a suitable position of the rear support leg 903 of the frame 900 to connect the standing board 100 to the frame 900.

Continuing to refer to FIGS. 11 and 12, in some embodiments, one of the first half-hoop 41 and the second half-hoop 42 can be integrally formed with the main body 43, which can reduce assembly steps. In some alternative embodiments, both the first half-hoop 41 and the second half-hoop 42 can be pivotally connected to the main body 43 through the third pivot shaft 420. The second end of the first half-hoop 41 and the second end of the second half-hoop 42 are, for example, fastened to each other. More specifically, the second end of the first half-hoop 41 may be provided with a first hook-shaped portion 411, and the second end of the second half-hoop 42 may be provided with a second hook-shaped portion 421. The second hook-shaped portion 421 is removably fastened to the first hook-shaped portion 4 1. The second end of the second half-hoop 4 2 may also be provided with an operating portion 423. The operating portion 423 protrudes outward from the second half-hoop 42 to facilitate operating the second half-hoop 42. The detachable connection method between the second end of the first half-hoop 41 and the second end of the second half-hoop 42 is not limited to the above embodiments. For example, in some alternative embodiments, the second end of the first half-hoop 41 and the second end of the second hoop half 42 can be removably connected to each other using a latch structure.

In some embodiments, the first half-hoop 41 and the second half-hoop 42 that are connected to each other may be arranged around the cross tube 904, or may be arranged around the rear support leg 903 (see FIG. 1). In order to prevent the connecting base 4 from sliding downward along the rear support leg 903, the first half-hoop 41 adjacent to the cross tube 904 is provided with a recess 410 for receiving the cross tube 904. When the first half-hoop 41 and the second half-hoop 42 are arranged around the rear support leg 903, the cross tube 904 restricts the connecting base 4 from sliding downward.

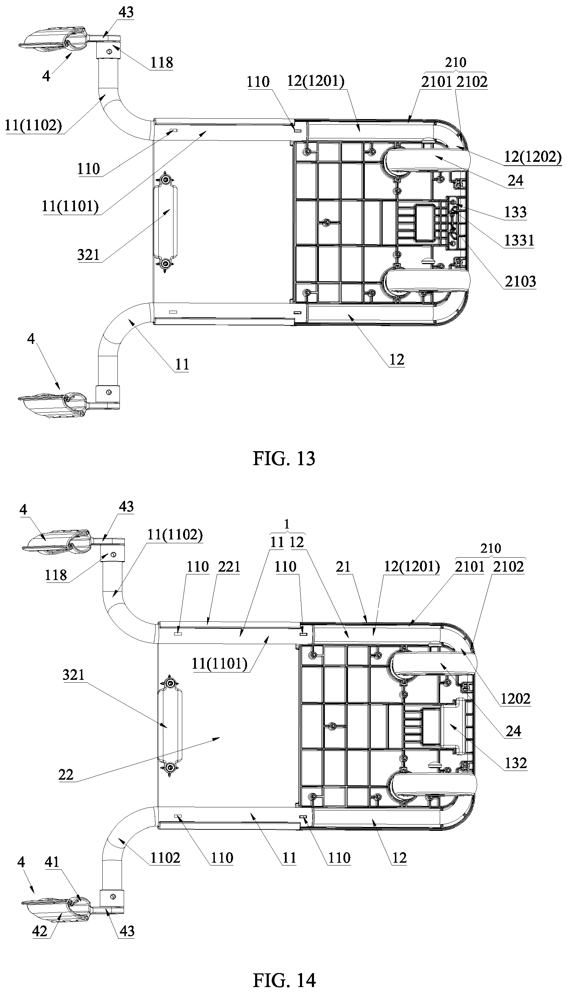

Referring to FIGS. 13 and 14, an exemplary embodiment of the bracket 1 is shown. The bracket 1 includes two sets of fixed sleeves 11 and telescopic sleeves 12 that are sleeved together. The two sets of fixed sleeves 11 and telescopic sleeves 12 are arranged basically symmetrically in the left-right direction. One of the two sets of fixed sleeves 11 and telescopic sleeves 12 is taken as an example for description as below. The fixed sleeve 11 is connected to the frame 900 through the connecting base 4, and the telescopic sleeve 12 is connected to the first support board 21. The telescopic sleeve 12 can extend and retract relative to the fixed sleeve 11, thereby changing the length of the bracket 1, and simultaneously driving the first support board 21 to move forward or backward.

Referring to FIGS. 12, 13 and 14, in some embodiments, the fixed sleeve 11 is, for example, L-shaped, including a first longitudinal section 1101 and a first transverse section 1102. The first transverse section 1102 is positioned at the front end of the first longitudinal section 1101. The first longitudinal section 1101 and the first transverse section 1102 are, for example, integrally formed, and a smooth transition is formed between the first longitudinal section 1101 and the first transverse section 1102. A blocking member 118 can be mounted at an end of the first transverse section 1102. The blocking member 118 is provided with a mounting hole 1180 (see FIG. 12). The fixed sleeve 11 is pivotally connected to the main body 43 of the connecting base 4 through the second pivot shaft 431 mounted in the mounting hole 1180. The telescopic sleeves 12 are sleeved inside the fixed sleeve 11. More specifically, the telescopic sleeve 12 is, for example, L-shaped, including a second longitudinal section 1201 and a second transverse section 1202. The second transverse section 1202 is positioned at the rear end of the second longitudinal section 1201. A smooth transition is formed between the second longitudinal section 1201 and the second transverse section 1202. The second longitudinal section 1201 of the telescopic sleeve 12 is slidably sleeved in the first longitudinal section 1101 of the fixed sleeve 11. An end of the first longitudinal section 1101 can be provided with a shaft sleeve 19. The shaft sleeve 19 is configured to support the telescopic sleeve 12 (see FIG. 12). A channel 210 is formed between the top board 211 and the bottom board 212. The channel 210 includes a first section 2101 that receives the second longitudinal section 1201 of the telescopic sleeve 12, and a second section 2102 that receives the second transverse section 1202 of the telescopic sleeve 12. When the bracket 1 is extended or retracted, the first longitudinal section 1101 of the fixed sleeve 11 can extend into or extend out of the first section 2101.

Continuing to refer to FIGS. 13 and 14, a rear end of the first longitudinal section 1101 of the fixed sleeve 11 remains partially overlapping a front end of the first section 2101. This ensures that the fixed sleeve 11 slides smoothly relative to the first section 2101. The cooperation between the first longitudinal section 1101 of the fixed sleeve 11 and the first section 2101 can also limit the relative position of the first support board 21 and the bracket 1 in the left-right direction. The cooperation between the second transverse section 1202 and the second section 2102 of the telescopic sleeve 12 can restrict the positions of the first support board 21 and the bracket 1 in the front-rear direction.

It should be noted that the implementation of the bracket 1 is not limited to the above embodiments, as long as the bracket 1 can drive the first support board 21 to move forward and backward by extending or retracting itself. For example, in some alternative embodiments, the telescopic sleeve 12 can be sleeved outside the fixed sleeve 11, and when the bracket 1 shortens in length, the fixed sleeve 11 extends into the inside of the telescopic sleeve 12. In this case, the telescopic sleeve 12 directly cooperates with the first section 2101 to limit the relative position of the first support board 21 and the bracket 1 in the left-right direction. In some alternative embodiments, the structures of the fixed sleeve 11 and the telescopic sleeve 12 can have various modifications and are not limited to the above-mentioned L-shaped structure. In some alternative embodiments, the bracket 1 may include one or more sets of fixed sleeves 11 and telescopic sleeves 12 that are sleeved together. The set of fixed sleeve 11 and telescopic sleeve 12 that are sleeved together may be arranged centrally in the left-right direction. A plurality of sets of fixed sleeves 11 and telescopic sleeves 12 that are sleeved together can be arranged symmetrically in the left-right direction. In some alternative embodiments, the fixed sleeve 11 of the bracket 1 and the two or more telescopic sleeves 12 can be successively sleeved together. The first support board 21 is connected to an end telescopic sleeve 12 of the plurality of telescopic sleeves 122. It can be understood that the end telescopic sleeve 12 refers to a telescopic sleeve 12 farthest from the fixed sleeve 11 when each of the telescopic sleeves 12 is fully extended.

Referring to FIGS. 11 to 13, the bracket 1 may further include a locking mechanism 13. The locking mechanism 13 may be configured to lock the position of the first support board 21. In this embodiment, the locking mechanism 13 locks the position of the first support board 21 by locking the length of the bracket 1, and can prevent the bracket 1 from being unintentionally lengthened or shortened.

More specifically, the locking mechanism 13 includes, for example, a first locking member 131 disposed in the telescopic sleeve 12 and a first unlocking member 132 operatively connected to the first locking member 131. As shown in FIG. 12, the second longitudinal section 1201 of the telescopic sleeve 12 is provided with a second positioning hole 120. The first locking member 131 extends out of the second positioning hole 120. The second positioning hole 120 and the first locking member 131 are proximal to the front end of the second longitudinal section 1201 of the telescopic sleeve 12. In addition, in this embodiment, at least two first positioning holes 110 are arranged on the first longitudinal section 1101 of the fixed sleeve 11. The two first positioning holes 110 are spaced apart in the front-rear direction. The first locking member 131 is slidably fitted into one of the first positioning holes 110. The first locking member 131 has a locked position and an unlocked position relative to the first positioning hole 110. In the locked position, the first locking member 131 is selectively inserted into one of the two first positioning holes 110 to fix the telescopic sleeve 12 in different telescopic positions. In the unlocked position, the first locking member 131 is withdrawn from the first positioning hole 110 into which the first locking member 131 is inserted, and the telescopic sleeve 12 can slide relative to the fixed sleeve 11. When it is necessary to adjust the telescopic position of the telescopic sleeve 12, an unlocking force is applied to the first unlocking member 132, and the first unlocking member 132 drives the first locking member 131 to move from the locked position to the unlocked position.

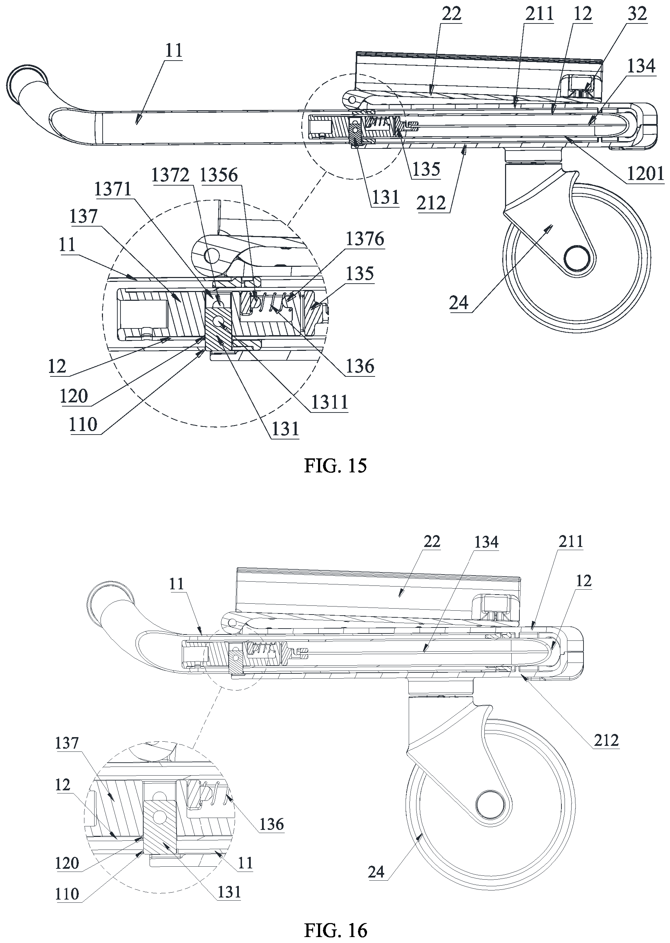

Referring to FIG. 15, when the first locking member 131 is inserted into the first positioning hole 110 proximal to the rear end of the fixed sleeve 11, the telescopic sleeve 12 is locked in an extended position, so that the second support board 2 can be expanded to support the second support board 22 on the fixed sleeve 11. Referring to FIG. 16, when the first locking member 131 is inserted into the first positioning hole 110 at the front end (that is, farther away from the rear end of the fixed sleeve 11), the telescopic sleeve 12 is locked in a retracted position, and the second support board 22 cannot be expanded.

The number of first positioning holes 110 of the fixed sleeve 11 is not limited to herein. For example, in some alternative embodiments, at least one first positioning hole 110 may be disposed between the first positioning hole 110 at the front end and the first positioning hole 110 at the rear end. After the second support board 22 is overlapped on the first support board 21 so as not to interfere with the movement of the telescopic sleeve 12, the telescopic sleeve 12 can drive the first support board 21 and the second support board 22 to move back and forth, and the first locking member 131 can be inserted into any of the first positioning holes 110 as needed. It can be understood that the greater the number of the first positioning holes 110, the more lockable telescopic positions the telescopic sleeve 12 has. Furthermore, in some embodiments, only one first positioning hole 110 may be provided, so that the telescopic sleeve 12 has a lockable telescopic position.

Referring again to FIGS. 11 and 12, an exemplary embodiment of the operative connection between the first unlocking member 132 and the first locking member 131 is shown. It should be noted that the implementation of the operative connection between the first unlocking member 132 and the first unlocking member 132 is not limited thereto. The locking mechanism 13 further includes a first driving member 133, a pulling member 134, a second driving member 135, and a first elastic reset member 136. A first end of the pulling member 134 is connected to the first driving member 133, and a second end of the pulling member 134 is connected to the second driving member 135. The first driving member 133 is operatively connected to the first unlocking member 132, and the second driving member 135 is operatively connected to the first locking member 131. The first elastic reset member 136 is configured to drive the first locking member 131 to move toward the locked position. The first unlocking member 132 can remotely drive the first locking member 131 to be unlocked through the first driving member 133, the pulling member 134 and the second driving member 135. Therefore, the first unlocking member 132 can be mounted at a position that is away from the first locking member 131 and is convenient for the parent to operate.

Referring to FIGS. 11 and 12, in some embodiments, the first unlocking member 132 is mounted on the bottom board 212 and movable in the front-rear direction, more specifically, mounted on the bottom of the rear end of the bottom board 212, which is convenient for manual operation and is not easy to be accidentally touched by the child standing on the standing board 100. The first unlocking member 132 includes, for example, an operating portion 1329 and a protruding first stopper 1328. A bottom surface of the bottom board 212 may be provided with a recess 2129. The first stopper 1328 of the first unlocking member 132 is positioned inside the first support board 21. The operating portion 1329 of the first unlocking member 132 extends forward into the recess 2129 along a sidewall of the recess 2129. When it is necessary to unlock the first locking member 131, it is sufficient to press the first unlocking member 132 backward. In some alternative embodiments in which the bottom board 212 is omitted, the first unlocking member 132 may be mounted at a suitable position on the top board 211, for example.

Referring to FIG. 13, in some embodiments, the first driving member 133 is mounted, for example, in a slideway 2103 in the first support board 21. The slideway 2103 extends in the left-right direction, so that the first driving member 133 can slide in the left-right direction, and the sliding direction of the first driving member 133 intersect with a moving direction of the first unlocking member 132. Referring to FIG. 15, the second driving member 135 is sleeved in the second longitudinal section 1201 of the telescopic sleeve 12. A moving direction of the second driving member 135 intersects with the moving direction of the first locking member 131. The pulling member 134 can be a flexible cable (such as a wire rope). The pulling member 134 is inserted into the telescopic sleeve 12 and connected between the first driving member 133 and the second driving member 135.

Referring again to FIGS. 11 and 12, in some embodiments, the first unlocking member 132 is provided with a first slope 1321. In addition, as shown in FIG. 12, the first driving member 133 is provided with a first driving slope 1331. The first slope 1321 abuts against the first driving slope 1331. When the first unlocking member 132 is moved backward by the unlocking force, the first unlocking member 132 pushes the first driving member 133 to move in the slideway 2103 through the cooperation of the first slope 1321 and the first driving slope 1331, and then pull the second driving member 135 through the pulling member 134. When the second driving member 135 is pulled, the first locking member 131 is driven to withdraw from the first positioning hole 110 into which the first locking member 131 is inserted.

It should be noted that the structures of the first unlocking member 132 and the first driving member 133 are not limited thereto, as long as the movement of the first unlocking member 132 can be converted into the movement of the first driving member 133, so as to drive the first locking member 131 to be unlocked. For example, in some alternative embodiments, only one of the first unlocking member 132 and the first driving member 133 may be provided with a slope.

Continuing to refer to FIGS. 11 and 12, in some embodiments, the second driving member 135 has an inclined hole 1350. The inclined hole 1350 includes a second inclined surface 1352 and a third inclined surface 1353 opposite to the second inclined surface 1352. The first locking member 131 includes a first shaft 1311. The first shaft 1311 and the first locking member 131may be integrally formed, or the first shaft 1311 may be mounted in a hole 1310 of the first locking member 131. The first shaft 1311 is inserted into the inclined hole 1350. When the second driving member 135 is driven and moved by the pulling member 134, the second inclined surface 1352 abuts against and drives the first shaft 1311, so that the first locking member 131 is withdrawn from the first positioning hole 110 into which the first locking member 131 is inserted. In other words, the second driving member 135 can drive the first locking member 131 through the first shaft 1311.

Continuing to refer to FIGS. 11 and 12, in some embodiments, in order to make the movement of the first locking member 131 more reliable, a fixed base 137 can be mounted in the telescopic sleeve 12. The fixed base 137 is provided with a first slideway 1371 and a first elongated hole 1372 in communication with the first slideway 1371. The first locking member 131 is in sliding fit with the first slideway 1371, and the first shaft 1311 is in sliding fit with the first elongated hole 1372.

Th first elastic reset member 136 can be implemented in various ways. Referring to FIGS. 11 and 12, in some embodiments, the first elastic reset member 136 includes a spring clamped between the fixed base 137 and the second driving member 135. In order to facilitate the fixation of the first elastic reset member 136, the second driving member 135 may be provided with a cavity 1355, and the fixed base 137 is provided with a second stopper 1375. The second stopper 1375 extends into the cavity 1355. The first elastic reset member 136 is clamped between a sidewall of the cavity 1355 and the second stopper 1375. Positioning posts 1356 and 1376 for positioning the first elastic reset member 136 are respectively disposed on the sidewall of the cavity 1355 and the second stopper 1375. The first elastic reset member 136 is used to push the second driving member 135 to reset. When the second driving member 135 performs a reset movement, the third inclined surface 1353 of the inclined hole 1350 abuts against and drives the first shaft 1311, so that the first locking member 131 is inserted into the first positioning hole 110. During the reset movement of the second driving member 135, the second driving member 135 pulls the first driving member 133 to perform a reset movement through the pulling member 134. In cooperation with the first slope 1321 and the first driving slope 1331, the first unlocking member 132 also performs a reset movement.

It should be noted that although the first elastic reset member 136 is described as above by taking the spring that drives the second driving member 135 to reset as an example, in other embodiments, the number and position of the first elastic reset member 136 may vary. For example, the first elastic reset member 136 may include a spring abutting against the first locking member 131, a spring abutting against the first driving member 133, a spring abutting against the first unlocking member 132, etc.

It should be noted that the locking mechanism 13 can be implemented in various ways, and which is not limited thereto. For example, in some embodiments, the bracket 1 includes the fixed sleeve 11 and at least two telescopic sleeves 12 that are connected in sequence. The locking mechanism 13 configured to adjust the length of the bracket 1 can, for example, have the same configuration as a locking mechanism of a pull rod of a suitcase, and which will not be repeated herein.

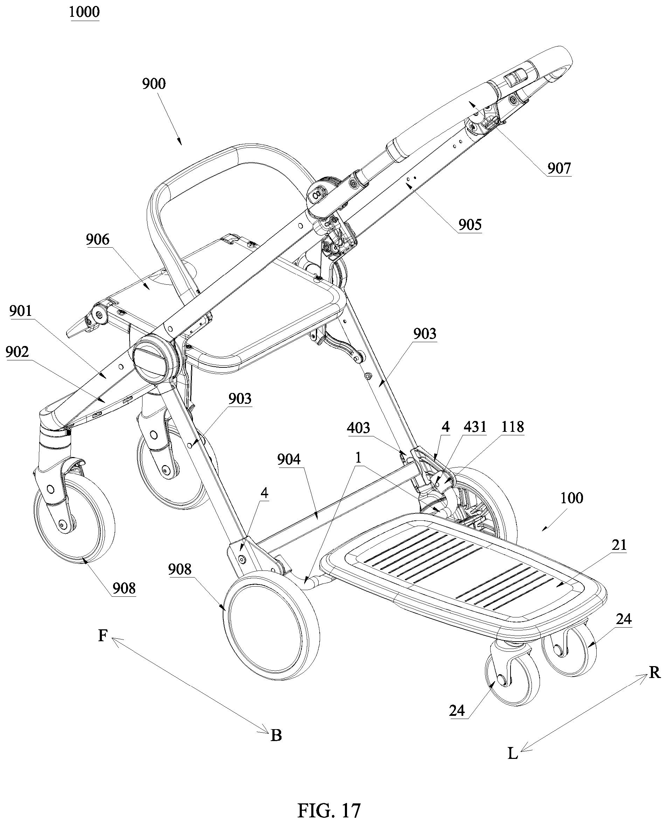

FIG. 17 shows a perspective view of a child carrier 1000 according to a second embodiment of the present application. The child carrier 1000 includes a frame 900 and a standing board 100 according to an embodiment of the present application. The standing board 100 is a modification of the standing board 100 in the above first embodiment. In the case of no conflict, the standing board 100 in this embodiment can have the same configuration as that in the first embodiment. The following mainly describes the differences between the standing board 100 in this embodiment and the standing board 100 in the above first embodiment.

Referring to FIG. 17, the connecting base 4 has, for example, an engaging space 403. The connecting base 4 is engaged with the rear support leg 903 through the engaging space 403, for example. For example, the first support board 21 has a larger area and the second support board 22 in the above first embodiment can be omitted. When the bracket 1 is extended forward or retracted backward, the bracket 1 drives the first support board 21 to move forward and backward as a whole, and an effective area of the first support board 21 used for a child to stand on (the part of the first support board 21 positioned behind the cross tube 904) changes accordingly, to satisfy the standing needs of children of different body sizes.

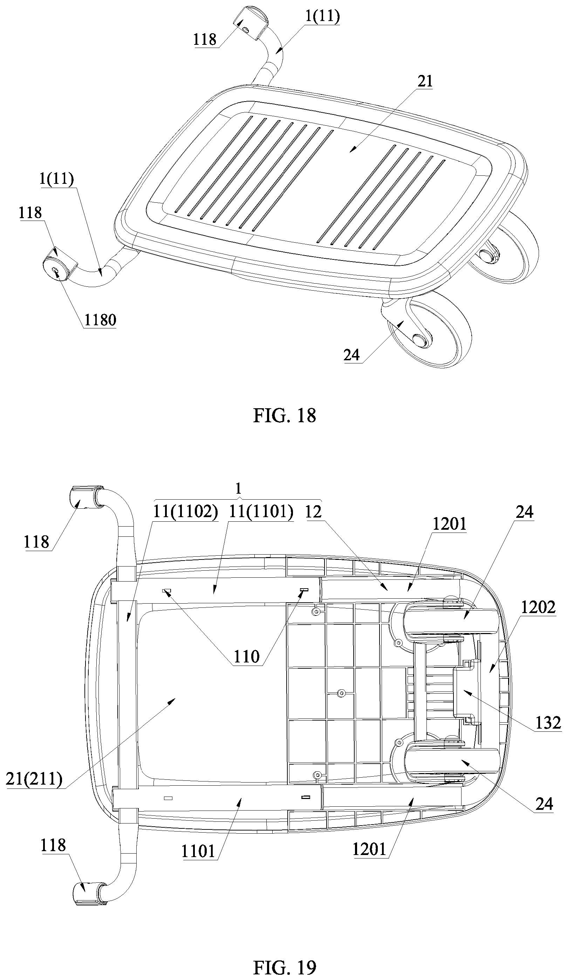

Referring to FIGS. 18 and 19, an exemplary embodiment of the bracket 1 is shown. The bracket 1 includes the fixed sleeve 11 and the telescopic sleeve 12. The connecting base 4 is mounted on the fixed sleeve 11. The telescopic sleeve 12 is connected to the first support board 21. The telescopic sleeve 12 can be extended and retracted relative to the fixed sleeve 11, thereby changing the length of the bracket 1, and driving the first support board 21 to move forward or backward to adjust the effective area of the first support board 21.

More specifically, referring to FIG. 19, the fixed sleeve 11 includes, for example, a first transverse section 1102 and at least one first longitudinal section 1101. In this embodiment, two first longitudinal sections 1101 are taken as an example for description. The first transverse section 1102 is positioned at the front end of the longitudinal section 1101. The blocking member 118 can be mounted at the end of the first transverse section 1102. The blocking member 118 is pivotally connected to the connecting base 4 through the second pivot shaft 431 (see FIG. 17). The two first longitudinal sections 1101 are spaced apart and connected to the first transverse section 1102. Each of the first longitudinal section 1101 and the first transverse section 1102 are fixed to each other, for example, by welding, riveting, or screwing. The telescopic sleeve 12 includes the second transverse section 1202 and at least one second longitudinal section 1201. Each of the at least one second longitudinal section 1201 is sleeved with a corresponding one of the at least one first longitudinal section 1101. In this embodiment, two second longitudinal sections 1201 are taken as an example for description. The second transverse section 1202 is positioned at the rear end of the second longitudinal section 1201. The two longitudinal sections 1201 are spaced apart and connected to the second transverse section 1202. The second transverse section 1202 and the second longitudinal section 1201 are integrally formed, for example. The two first longitudinal sections 1101 of the fixed sleeve 11 correspond to the two second longitudinal sections 1201 of the telescopic sleeve 12 one by one. The second longitudinal section 1201 of the telescopic sleeve 12 is slidably sleeved inside the first longitudinal section 1101 of the fixed sleeve 11. In some alternative embodiments, the first longitudinal section 1101 of the fixed sleeve 11 is slidably sleeved inside the second longitudinal section 1201 of the telescopic sleeve 12.

In some embodiments, the first support board 21 remains in contact with the first transverse section 1102 (or in other words, during the forward and backward extension and retraction of the bracket 1, the first support board 21 remains overlapping the first transverse section 1102). Referring to FIG. 18, when the bracket 1 is extended to its longest length, the front end of the first support board 21 is supported by the first transverse section 1102. In other embodiments, the first support board 21 can also be supported only by the first longitudinal section 1101 of the fixed sleeve 11 without contacting the first transverse section 1102. Accordingly, a width of the first support board 21 may be greater than the distance between the two first longitudinal sections 1101.

In addition, referring to FIG. 19, in this embodiment, the first longitudinal section 1101 of the fixed sleeve 11 includes two fixing holes 110, which are configured to cooperate with the aforementioned first locking member 131 to lock the position of the first support board 21. In other embodiments, the first longitudinal section 1101 of the fixed sleeve 11 may include more fixing holes 110 to adjust the position of the first support board 21 according to the child's body size, thereby adjusting the effective area for the child to stand on.

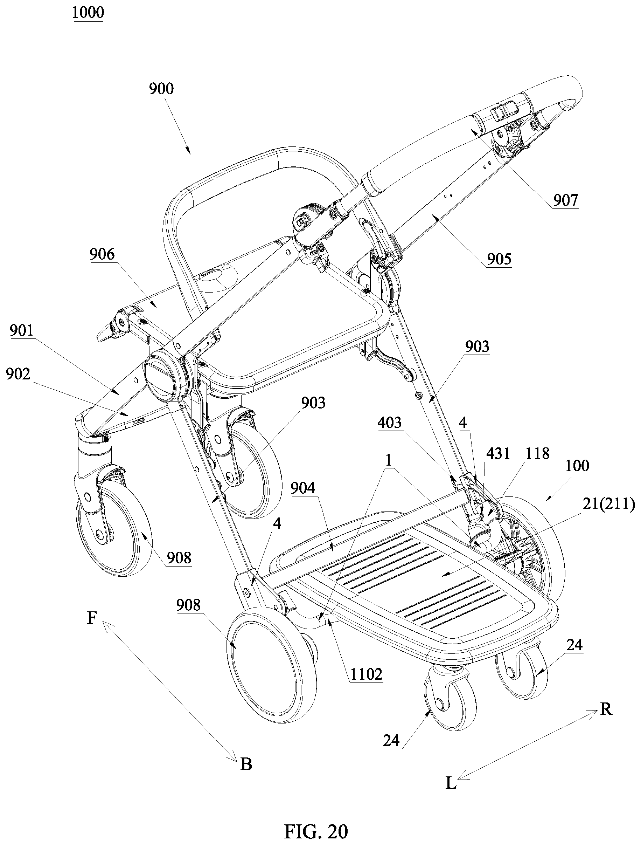

Referring to FIG. 20, when the length of the bracket 1 is shortened, the telescopic sleeve 12 drives the first support board 21 to slide forward relative to the first transverse section 1102, so that the effective area of the first support board 21 for the child to stand on becomes small. On the contrary, when the length of the bracket 1 is lengthened, the telescopic sleeve 12 drives the first support board 21 to slide backward relative to the first transverse section 1102, so that the effective area of the first support board 21 for the child to stand on becomes large.

In this embodiment, the first support board 21 includes, for example, the top board 211 and a bottom board (not shown in figures). The top board 211 is configured for the child to stand on. The bottom board is, for example, disposed at the bottom of the rear end of the top board 211, generally corresponding to the area of the telescopic sleeve 12. Moreover, in this embodiment, the locking mechanism 13 as described in the above first embodiment can also be included. The configuration of the locking mechanism 13 will not be described repeatedly herein.

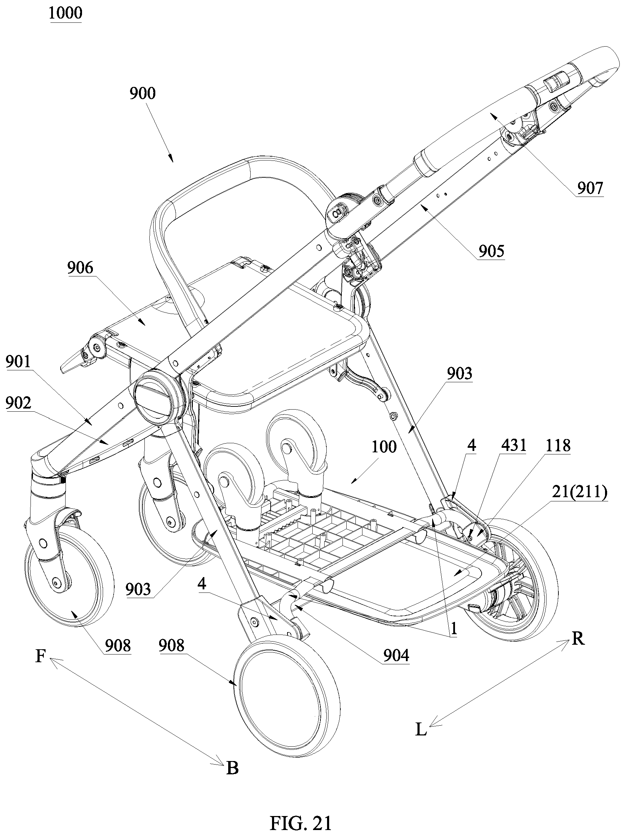

Referring to FIG. 21, similarly to the above first embodiment, when the child carrier 1000 is in a normal use state and the standing board 100 does not need to be used, the bracket 1 can be flipped forward so that the standing board 100 is retracted and positioned on the space under the seat 906. This can reduce the impact of the standing board 100 on the range of motion of the feet of the parent.

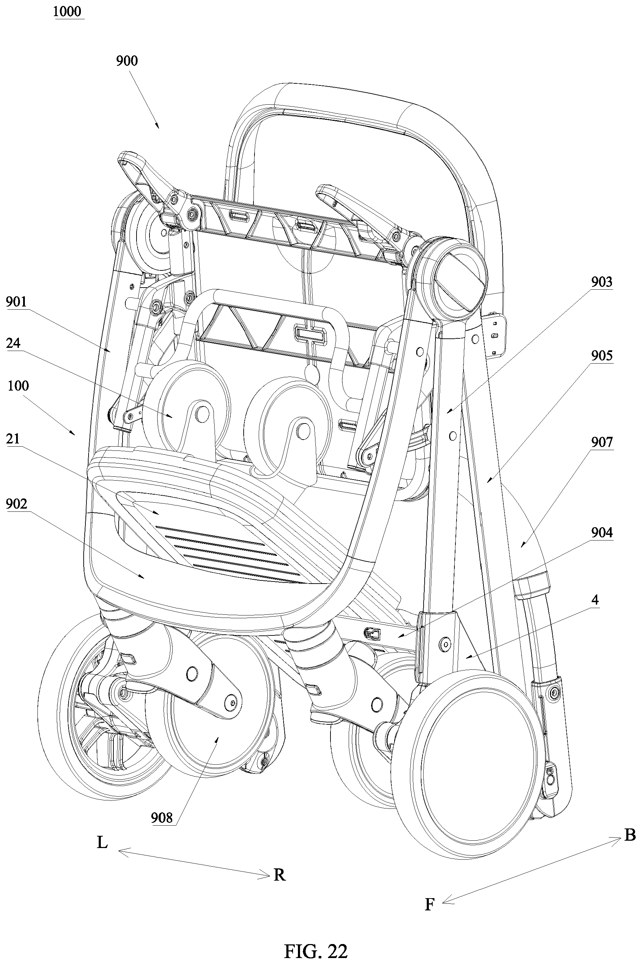

Referring to FIG. 22, it should be noted that after the bracket 1 of this embodiment is flipped forward, the first support board 21 is not locked and can still rotate relative to the second pivot shaft 431. When the frame 900 is folded, the front support leg 901 and the lower push handle 905 of the frame 900 approach the rear support leg 903. The first support board 21 can rotate with the folding of the frame 900, which may not interfere with the folding of the frame 900. As shown in FIG. 22, after the frame 900 is folded, the rotation of the standing board 100 may be restricted by the front support leg 901, the cross tube 904, and the seat 906, and will not rotate arbitrarily, which is beneficial to the convenience of transporting the frame 900.

It should be noted that after the frame 900 is folded, the standing board 100 of this embodiment is stored obliquely between the two rear support legs 903 (or the two front support legs 901). Specifically, as shown in FIG. 22, the extending direction of the first support board 21 may intersect with the extending direction of at least one of the front support leg 901, the rear support leg 903, or the push handle frame (including the upper push handle 907 and the lower push handle 905). In this embodiment, the extending direction of the first support board 21 intersects with the extending direction of two of the front support leg 901, the rear support leg 903, and the push handle frame (including the upper push handle 907 and the lower push handle 905).

In addition, the first support board 21 at least extends through the plane defined by the two rear support legs 903. In this embodiment, the first support board 21 extends from a space between the two rear support legs 903 to a space between the two front support legs 901. In this way, even if the standing board 100 is not removed, the volume of the folded frame 900 will not be significantly increased.

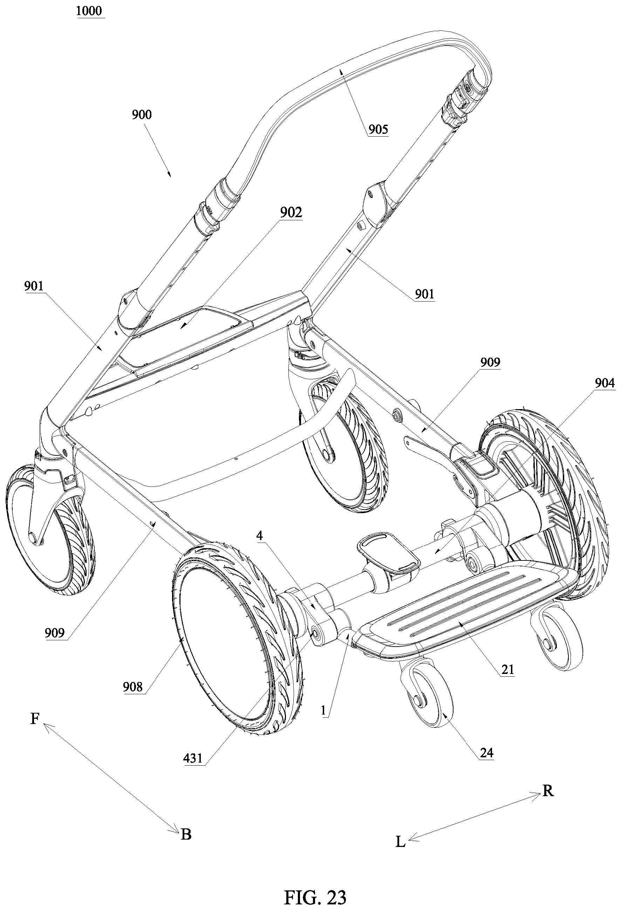

FIG. 23 shows a perspective view of a child carrier 1000 according to a third embodiment of the present application. The child carrier 1000 includes a frame 900 and a standing board 100 according to an embodiment of the present application. As mentioned in the foregoing embodiments, the child carrier 1000 is specifically described by taking a stroller as an example, and the frame 900 is correspondingly described by taking the frame of the stroller as an example. In some alternative embodiments, the type of child carrier 1000 is not limited to the stroller shown in the figures. In this embodiment, another structure of the frame 900 is shown. The frame 900 includes two front support legs 901, a footrest 902 connected between the two front support legs 901, two base frames 909 connected between two front support legs 901, a cross tube 904 connected between the two base frames 909, an upper push handle 905, wheels 908 etc. The connection relationships among the various components of the frame 900 can be found in the relevant technology, and will not be repeatedly described herein.

Referring to FIG. 23, the standing board 100 includes a bracket 1, a first support board 21, a support wheel 24, a connecting base 4, etc. The bracket 1 is connected to the cross tube 904 through the connecting base 4. The first support board 21 is mounted on the bracket 1. The support wheel 24 is mounted on the first support board 21. The bracket 1 and the first support board 21 can have the same configuration as those in the above embodiments, and which will not be repeatedly described herein.

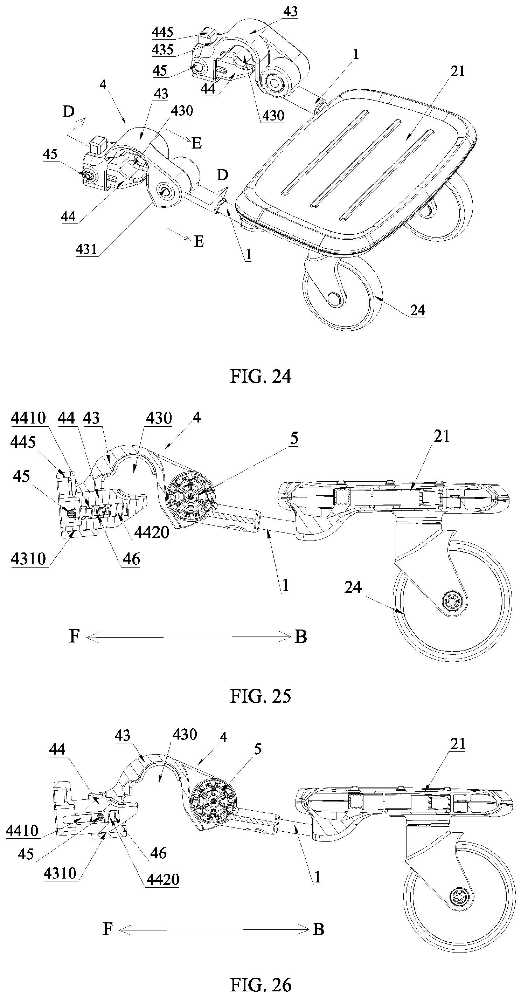

Referring to FIGS. 24 to 26, another exemplary configuration of the connecting base 4 is shown in this embodiment. The connecting base 4 includes a main body 43 and a second locking member 44. The main body 43 includes an engaging groove 430. The engaging groove 430 is configured to be detachably connected to the frame 900. The second locking member 44 is movably mounted on the main body 43. The second locking member 44 has a closed position (FIG. 25) in which the engaging groove 430 is closed and an open position (FIG. 26) in which the engaging groove 430 is opened. By switching the second locking member 44 between the closed position and the open position, the standing board 100 can be easily mounted on or removed from the cross tube 904.

Referring to FIGS. 25 and 26, in some embodiments, the main body 43 of the connecting base 4 is provided with a second slideway 4310. The second locking member 44 is in sliding fit with the second slideway 4310, so as to move between the closed position and the open position. A second elastic reset member 46 is further disposed between the main body 43 and the second locking member 44. The second elastic reset member 46 is configured to drive the second locking member 44 to move toward the closed position.

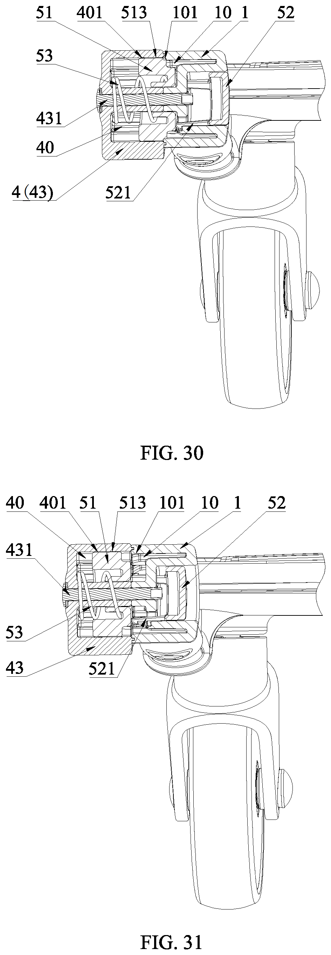

Continuing to refer to FIGS. 25 and 26, in some embodiments, the second locking member 44 is provided with a mounting groove 4420 and a second elongated hole 4410 in communication with the mounting groove 4420. The second elastic reset member 46 includes a spring mounted in the mounting groove 4420. A second shaft 45 is mounted in the main body 43, for example, mounted in a hole 4350 of the main body 43. The second shaft 45 is in sliding fit with the second elongated hole 4410 and extends into the mounting groove 4420, and the second shaft 45 abuts against the second elastic reset member 46. As shown in FIG. 26, when the second locking member 44 is pulled forward to open the engaging groove 430, the second elastic reset member 46 is compressed. When the forward pulling force on the second locking member 44 is removed, the second elastic reset member 46 drives the second locking member 44 to move and close the engaging groove 430. The second locking member 44 may be provided with a protruding operating portion 445, and the main body 4 3 may be provided with a recess 435. When the second locking member 44 is in the closed position, the operating portion 445 is locked into the recess 435. In some embodiments, an end cover may be mounted at an opening of the mounting groove 4420 (see an end cover 446 in FIG. 31).

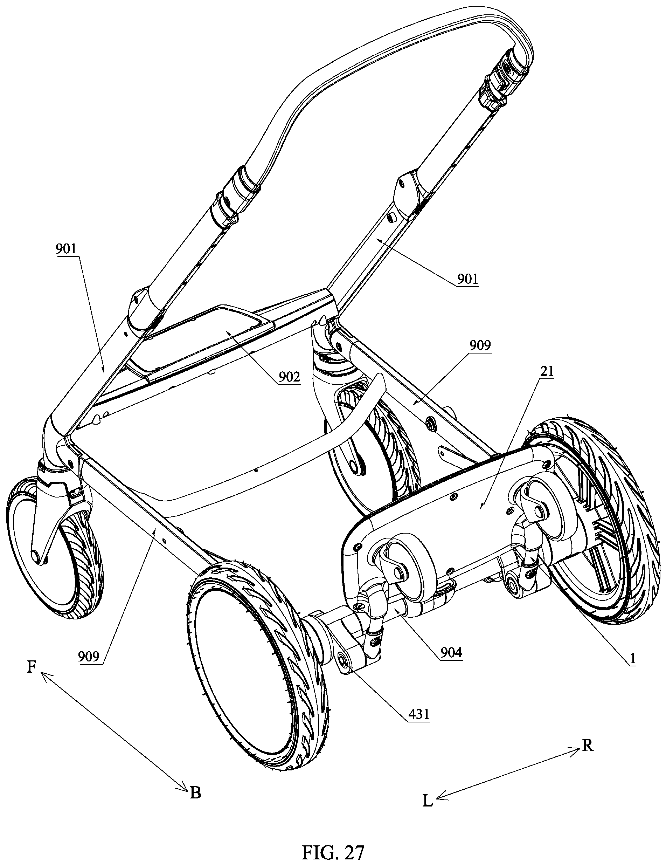

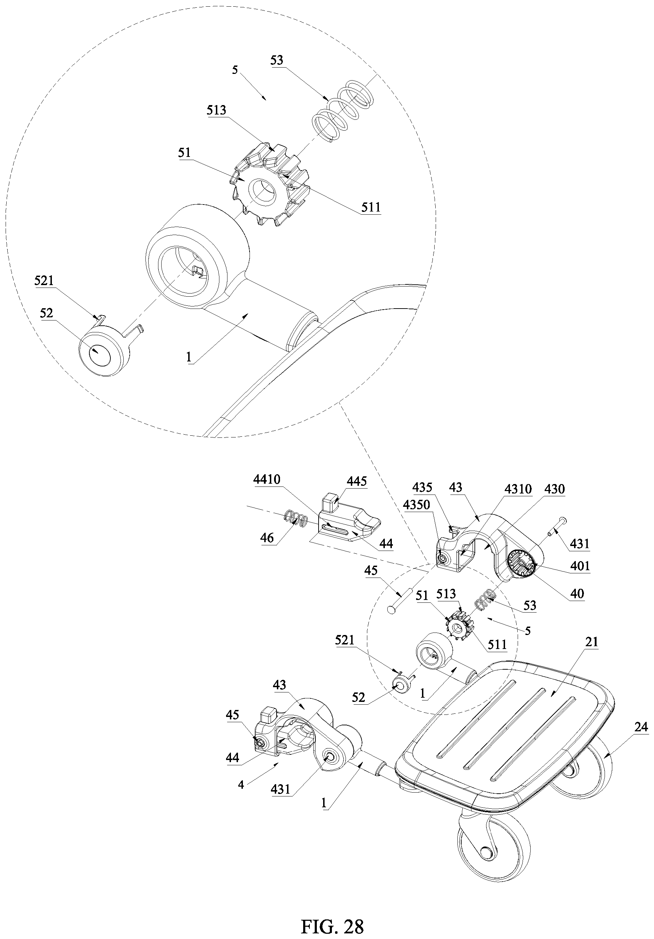

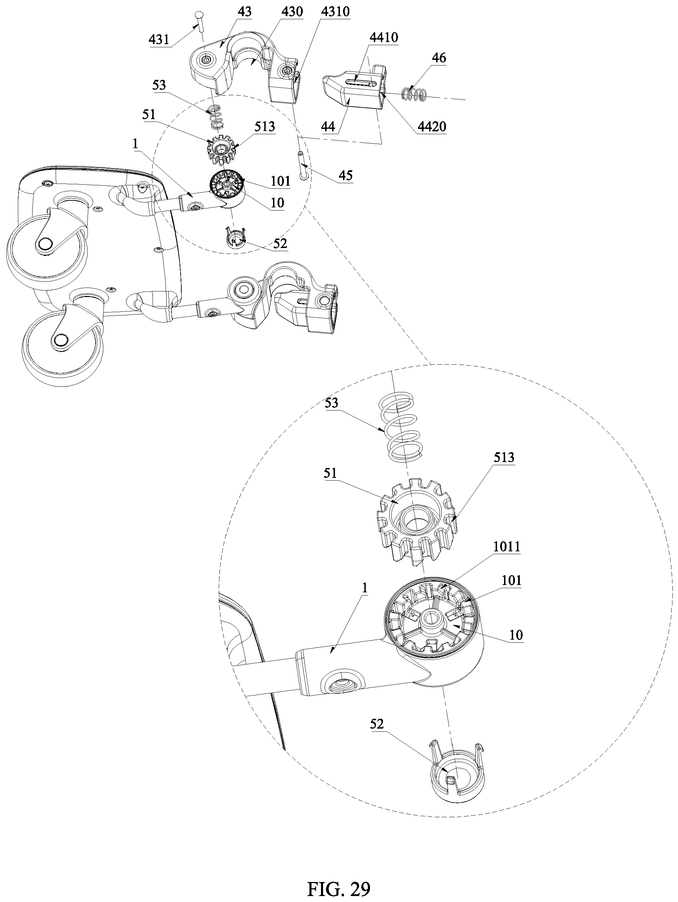

Referring to the perspective view of the child carrier 1000 shown in FIG. 27, the bracket 1 and the connecting base 4 are pivotally connected to each other through a second pivot shaft 431. The second pivot shaft 431 is positioned outside the cross tube 904. The forward flipping angle of the bracket 1 is restricted by the cross tube 904. Different from the above first embodiment, as shown FIGS. 28 and 29, in this embodiment, a rotation control mechanism 5 is disposed between the bracket 1 and the connecting base 4. The rotation control mechanism 5 is configured to control the rotation angle of the bracket 1. Referring to FIG. 26, when the standing board 100 is not in use, the standing board 100 can be flipped forward to a suitable position, and the standing board 100 can be maintained in the flipped position under the action of the rotation control mechanism 5.

Referring to FIGS. 28 to 31, an exemplary implementation of the rotation control mechanism 5 is shown. The rotation control mechanism 5 is configured to control the bracket 1 to make a unidirectional rotate around the second pivot shaft 431. The unidirectional rotation restricts the standing board 100 so that the standing board 100 is able to be flipped forward but not able to be flipped backward. More specifically, the rotation control mechanism 5 includes a locking gear 51. A plurality of third tooth portions 513 are disposed on a peripheral wall of the locking gear 51. The connecting base 4 includes a first receiving cavity 40. A cavity wall of the first receiving cavity 40 is provided with a first tooth portion 401. The bracket 1 includes a second receiving cavity 10. A second tooth portion 101 is disposed on a wall of the second receiving cavity 10. The locking gear 51 is positioned in the first receiving cavity 40 and the second receiving cavity 10 and can move in the axial direction between the bracket 1 and the connecting base 4.

The locking gear 51 has a locked position and an unlocked position. Referring to FIG. 30, when the locking gear 51 is in the locked position, the third tooth portion 513 of the locking gear 51 remains in engagement with the first tooth portion 401 of the connecting base 4 and the second tooth portion 101 of the bracket 1. The third tooth portion 513 is provided with an inclined engaging surface 511 (see FIG. 28), and the inclined engaging surface 511 abuts against the second tooth portion 101. When the first support board 21 is flipped upward, the inclined engaging surface 511 allows the bracket 1 to rotate forward unidirectionally, but does not allow the bracket 1 to flip backward. Referring to FIG. 31, when the locking gear 51 is in the unlocked position, the locking gear 51 moves in the axial direction so that the third tooth portion 513 of the locking gear 51 is completely disengaged from one of the first tooth portion 401 and the second tooth portion 101, and the bracket 1 can then rotate bidirectionally (that is, be flipped forward flipped and backward).

In the above embodiment, the inclined engaging surface 511 is disposed on the locking gear 51, an inclined engaging surface 1011 is further disposed on the second tooth portion 101 to cooperate with the inclined engaging surface 511. It can be understood that in other embodiments, an inclined engaging surface can also be disposed on the first tooth portion 401.

Continuing to refer to FIGS. 28 to 31, the rotation control mechanism 5 may further include a second unlocking member 52 and a third elastic reset member 53. The third elastic reset member 53 is configured to drive the locking gear 51 to move from the unlocked position to the locked position. The second unlocking member 52 is configured to drive the locking gear 51 to move from the locked position to the unlocked position. Referring to FIGS. 30 and 31, the second unlocking member 52 and the third elastic reset member 53 are positioned on both sides of the locking gear 51 respectively. The second unlocking member 52 is, for example, a button, which includes an elastic arm 521 abutting against the locking gear 51. When an external force is exerted to presses the second unlocking member 52, the elastic arm 521 of the second unlocking member 52 drives the locking gear 51 to the unlocked position, and the third elastic reset member 53 is compressed. When the external force is removed, the third elastic reset member 53 can drive the locking gear 51 to the locked position, and the second unlocking member 52 is reset.

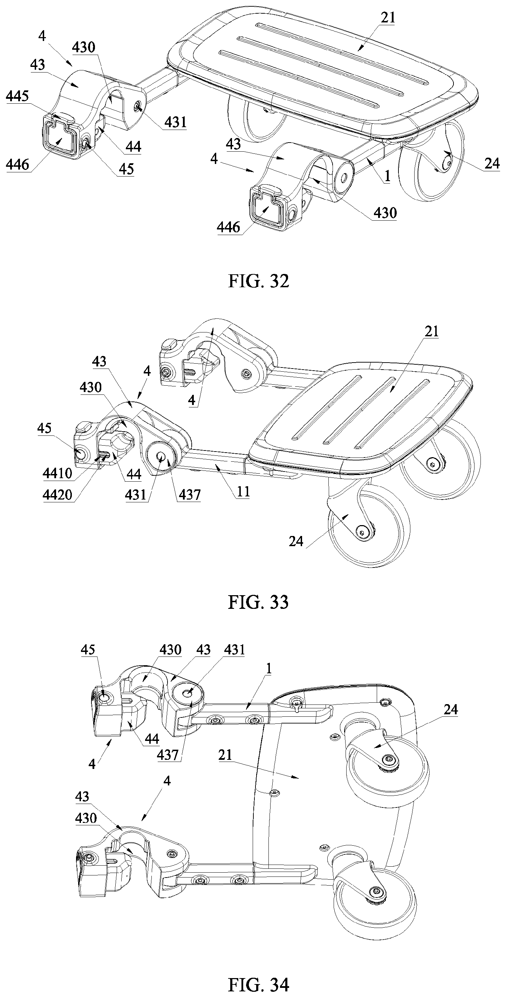

FIGS. 32 to 34 are perspective views of a standing board 100 according to an embodiment of the present application. The standing board 100 is a modification of the standing board 100 in the above third embodiment. In the case of no conflict, the standing board 100 in this embodiment can have the same configuration as that in the above third embodiment. The differences between the standing board 100 in this embodiment and the standing board 100 in the third embodiment are mainly described below.

Referring to FIGS. 32 and 33, in this embodiment, an end cove 446 mounted at the opening of the mounting groove 4420 is shown.

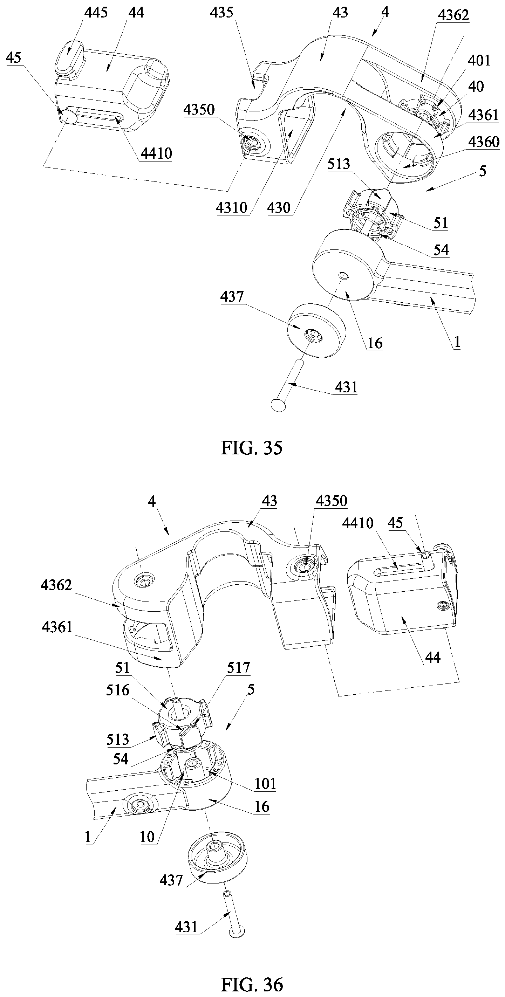

Referring to FIGS. 35 and 36, the connecting base 4 includes a first pivot base 4361 and a second pivot base 4362. The end 16 of the bracket 1 is clamped between the first pivot base 4361 and the second pivot base 4362. The bracket 1 is pivotally connected to the first pivot base 4361 and the second pivot base 4362 through the second pivot shaft 431. The second pivot base 4362 includes the first receiving cavity 40. The cavity wall of the first receiving cavity 40 is provided with the first tooth portion 401. The first pivot base 4361 includes a hole 4360. A decorative cover 437 is mounted in the hole 4360. The second pivot shaft 431 extends through the decorative cover 437. The bracket 1 includes a second receiving cavity 10. The second tooth portion 101 is disposed on the wall of the second receiving cavity 10. The locking gear 51 is positioned in the first receiving cavity 40 and the second receiving cavity 10, and can move in the axial direction of the second pivot shaft 431 between the bracket 1 and the connecting base 4.

The locking gear 51 has a locked position and an unlocked position. When the locking gear 51 is in the locked position, the third tooth portion 513 of the locking gear 51 remains in engagement with the first tooth portion 401 of the connecting base 4 and the second tooth portion 101 of the bracket 1. Referring to FIG. 35, the third tooth portion 513 is provided with a first oblique engaging surface 516 and a second oblique engaging surface 517. The first oblique engaging surface 516 and the second oblique engaging surface 517 are engaged with different teeth of the first tooth portion 401. When the first support board 21 is flipped upward or downward, the first support board 21 drives the bracket 1 to rotate, and the bracket 1 exerts a circumferential force on the locking gear 51. Under the action of the first oblique engaging surface 516 and the second oblique engaging surface 517, the locking gear 51 moves in the axial direction as the bracket 1 rotates, until the locking gear 51 moves to the unlocked position in which the locking gear 51 is not engaged with the first tooth portion 401. That is, the first oblique engaging surface 516 and the second oblique engaging surface 517 allow the locking gear 51 to move in the axial direction when being subjected to a circumferential force, so that the locking gear 51 moves to the unlocked position, thereby allowing the bracket 1 to rotate bidirectionally to adjust the positions of bracket 1 and standing board 100.

The rotation control mechanism 5 may further include a fourth elastic reset member 54. The fourth elastic reset member 54 is, for example, a spring, and is configured to drive the locking gear 51 to reset from the unlocked position to the locked position. When the bracket 1 rotates to the appropriate position, the first support board 21 is stopped to be flipped over, and the fourth elastic reset member 54 drives the locking gear 51 to move to the locked position, thereby locking the rotation angle of the bracket 1.

Although in the above embodiments, the first oblique engaging surface 516 and the second oblique engaging surface 517 are disposed on the locking gear 51, it can be understood that in other embodiments, the first oblique engaging surface 516 and the second oblique engaging surface 517 can be disposed on the first tooth part 401 or the second tooth part 101.

It can be understood that the implementation of the rotation control mechanism 5 is not limited thereto, as long as the bracket 1 can be allowed to rotate as needed, or the rotation angle of the bracket 1 can be allowed to be locked as needed.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A standing board (100) applicable to a child carrier, the standing board (100) comprising:
a bracket (1) having a front end configured to be connected to a frame of the child carrier;
a first support board (21) supported by the bracket (1); and
a second support board (22) adapted to be retracted or expanded according to a change in the length of the bracket (1),
wherein a length of the bracket (1) is adjustable such that a position of the first support board (21) in a front-rear direction is adjustable;
wherein the first support board (21) is disposed adjacent to a rear end of the bracket (1), and wherein when the second support board (22) is expanded, the second support board (22) is supported by the bracket (1) and positioned in front of the first support board (21), and the first support board (21) and the second support board (22) form a first support platform;
wherein the second support board (22) is movably connected to the first support board (21), and when the second support board (22) is retracted, the second support board (22) and the first support board (21) overlap to form a second support platform, an area of the second support platform being less than an area of the first support platform.

2. The standing board (100) according to claim 1, wherein a rear end of the second support board (22) is pivotally connected to a front end of the first support board (21), and when the second support board (22) is retracted, the second support board (22) is flipped backward onto the first support board (21); and/or
wherein the second support board (22) is slidingly connected to the first support board (21), and the second support board (22) is adapted to be retracted or expanded by sliding forward and backward.

3. The standing board (100) according to any one of claims 1 to 2, wherein the second support board (22) is telescopic.

4. The standing board (100) according to any one of claims 1 to 3,
wherein the standing board (100) further comprises a retaining mechanism (3) configured to retain a relative position of the first support board (21) and the second support board (22) when the second support board (22) is overlapped on the first support board (21);
optionally wherein the retaining mechanism (3) comprises:
magnetic members disposed on the first support board (21) and the second support board (22) respectively; or
a fastener disposed on the first support board (21) and/or the second support board (22).

5. The standing board (100) according to any one of claims 1 to 4, wherein the bracket (1) comprises a locking mechanism (13) configured to lock the length of the bracket (1).

6. The standing board (100) according to any one of claims 1 to 4, wherein the bracket (1) comprises:
a fixed sleeve (11) configured to be connected to the frame (900);
a telescopic sleeve (12) sleeved with the fixed sleeve (11), the first support board (21) being mounted on the telescopic sleeve (12); and
a locking mechanism (13) configured to lock a telescopic position of the telescopic sleeve (12), optionally wherein the fixed sleeve (11) and the at least one telescopic sleeve are successively sleeved together, and
wherein the first support board (21) is connected to an end of telescopic sleeve (12) of the at least one telescopic sleeve (122);
more optionally, wherein the fixed sleeve (11) comprises a first transverse section (1102) and at least one first longitudinal section (1101) positioned at a front end of the at least one first longitudinal section (1101),
wherein the at least one telescopic sleeve comprises at least one second longitudinal section (1201), and each of the at least one second longitudinal section (1201) is sleeved with a corresponding one of the at least one first longitudinal section (1101), and
wherein the first support board (21) remains in contact with the first transverse section (1102).

7. The standing board (100) according to claim 6, wherein at least two first positioning holes (110) are arranged on the fixed sleeve (11), and arranged at intervals in the front-rear direction, and the telescopic sleeve (12) is sleeved inside the fixed sleeve (11), and
wherein the locking mechanism (13) comprises:
a first locking member (131) disposed in the telescopic sleeve (12) and having a locked position, in which the first locking member (131) is selectively inserted into one of the at least two first positioning holes (110), and an unlocked position, in which the first locking member (131) is withdrawn from the one of the at least two first positioning holes (110) into which the first locking member (131) is inserted; and
a first unlocking member (132) configured to drive the first locking member (131) to move from the locked position to the unlocked position.

8. The standing board (100) according to claim 7, wherein the locking mechanism (13) further comprises:
a first driving member (133);
a second driving member (135); and
a pulling member (134) having a first end connected to the first driving member (133), and a second end connected to the second driving member (135),
wherein the first driving member (133) is operatively connected to the first unlocking member (132), and the second driving member (135) is operatively connected to the first locking member (131).

9. The standing board (100) according to claim 8, wherein the first unlocking member (132) is mounted on the first support board (21) and movable in the front-rear direction, and a moving direction of the first unlocking member (132) intersects with a moving direction of the first driving member (133),
wherein the second driving member (135) is sleeved in the telescopic sleeve (12),
wherein the telescopic sleeve (12) is provided with a second positioning hole (120) in sliding fit with the first locking member (131), and
wherein a moving direction of the second driving member (135) intersects with a moving direction of the first locking member (131); and/or
wherein:
the second driving member (135) is sleeved in the telescopic sleeve (12);
a fixed base (137) is mounted in the telescopic sleeve (12), and is provided with a first slideway (1371) and a first elongated hole (1372) in communication with the first slideway (1371);
the first locking member (131) is in sliding fit with the first slideway (1371), and comprises a first shaft (1311) in sliding fit with the first elongated hole (1372); and
the second driving member (135) drives the first locking member (131) through the first shaft (1311).

10. The standing board (100) according to claim 6, wherein the first support board comprises a top board (211) and a bottom board (212), and the top board (211) and the bottom board (212) are butted against each other to form a channel (210) receiving the telescopic sleeve (12), and wherein the locking mechanism (13) comprises:
a first locking member (131) disposed at a front end of the telescopic sleeve (12), and configured to lock a telescopic position of the telescopic sleeve (12);
a first unlocking member (132) mounted at a rear end of the bottom board (212) and movable in the front-rear direction; and
a pulling member (134), the first unlocking member (132) being adapted to drive the first locking member (131) to be unlocked through the pulling member (134).

11. The standing board (100) according to any one of claims 1 to 10, wherein the front end of the bracket (1) is provided with a connecting base (4), and
wherein the connecting base (4) comprises:
a main body (43) comprising an engaging groove (430) configured to be detachably connected to the frame (900); and
a second locking member (44) movably mounted on the main body (43) and having a closed position in which the engaging groove (430) is closed and an open position in which the engaging groove (430) is opened.

12. The standing board (100) according to any one of claims 1 to 10, wherein:
the front end of the bracket (1) is provided with a connecting base (4), and the connecting base (4) is configured to be connected to the frame (900);
the bracket (1) and the connecting base (4) are pivotally connected to each other through a pivot shaft (431);
the pivot shaft (431) is positioned outside a cross tube (904) of the frame (900); and
a forward flipping angle of the bracket (1) is restricted by the cross tube (904).

13. The standing board (100) according to any one of claims 1 to 10, wherein the front end of the bracket (1) is provided with a connecting base (4), and the connecting base (4) is configured to be connected to the frame (900);
the bracket (1) and the connecting base (4) are pivotally connected to each other;
a rotation control mechanism (5) is disposed between the bracket (1) and the connecting base (4) and is configured to control a rotation angle of the bracket (1).

14. The standing board (100) according to claim 13, wherein the bracket (1) and the connecting base (4) are pivotally connected to each other through a pivot shaft (431); and the rotation control mechanism (5) is configured to control the bracket (1) to make a unidirectional rotate around the pivot shaft (431).

15. The standing board (100) according to claim 14, wherein:
the rotation control mechanism (5) comprises a locking gear (51) disposed between the bracket (1) and the connecting base (4), and movable in an axial direction;
the locking gear (51) has a locked position and an unlocked position;
when the locking gear (51) is in the locked position, the locking gear (51) remains in engagement with the bracket (1) and the connecting base (4), and allows the bracket (1) to rotate unidirectionally; and
when the locking gear (51) is in the unlocked position, the locking gear (51) is disengaged from one of the bracket (1) and the connecting base (4), and allows the bracket (1) to rotate bidirectionally; or wherein:
the rotation control mechanism (5) comprises a locking gear (51) disposed between the bracket (1) and the connecting base (4), and movable in an axial direction;
the connecting base (4) is provided with a first tooth portion (401), the bracket (1) is provided with the second tooth portion (101), the locking gear (51) is provided with a third tooth portion (513);
the third tooth portion (513) is engaged with the first tooth portion (401) and the second tooth portion (101);
one of the first tooth portion (401) and the second tooth portion (101) is in contact with the third tooth portion (513) though a first oblique engaging surface (516) and a second oblique engaging surface (517); and
the first oblique engaging surface (516) and the second oblique engaging surface (517) allows that the locking gear (51) moves in the axial direction when being subjected to a circumferential force, to allow the bracket (1) to rotate bidirectionally.
